# EUROPEAN PATENT APPLICATION

(11) **EP 4 625 175 A1**
(43) Date of publication of application: **01.10.2025**
(21) Application number: 25158292.0
(22) Date of filing: 17.02.2025
(51) Int. Cl.: G06F 11/10

(54) **METADATA DEPENDENT ERROR CORRECTION PROCESSORS, METHODS, SYSTEMS, AND INSTRUCTIONS**

(30) Priority: 29.03.2024 US 202418622853
(71) Applicant: INTEL Corporation, Santa Clara, CA 95054 (US)
(72) Inventor: Durham, David M., Beaverton OR, 97007 (US); Deutsch, Sergej, Hillsboro OR, 97123 (US); Sultana, Salmin, Hillsboro OR, 97124 (US)
(74) Representative: Samson & Partner Patentanwälte mbB

(57) **Abstract**

An apparatus includes a decode unit to decode an instruction. The instruction is to indicate address information corresponding to a location of data having one or more errors in system memory. The apparatus includes an execution unit to perform operations corresponding to the instruction. The operations include determining whether there is only a single metadata value, out of all possible metadata values of a given bit length, which allows a metadata dependent error correction code (ECC) to correct the one or more errors in the data. The metadata dependent ECC corresponds to the data and is stored in the system memory. The operations include either storing the single metadata value in a destination storage location if the determination is that there is only the single metadata value or else indicating the determination is that there is not only the single metadata value. Other apparatus, methods, systems, and instructions are disclosed.

## Description

### BACKGROUND

### Technical Field

Embodiments described herein generally relate to data processing. In particular, embodiments described herein generally relate to error correction.

### Background Information

Errors can occasionally be introduced into data stored in system memory. These errors may occur for various reasons. In some cases, a cosmic particle may impact the system memory causing the value of one or more bits of the data to flip (e.g., a bit cleared to binary zero may be erroneously set to binary one, or vice versa). In other cases, part of the circuitry used to implement the system memory (e.g., one or more memory cells) may stick or otherwise fail. Errors may potentially include a full device failure in a multi-device Dual In-Line Memory Module (DIMM) configuration.

Commonly, the system memory may include parity bits or other error correction code (ECC) bits to help detect and correct such errors introduced into the data. The ECC bits may effectively provide redundancy according to an error correction scheme. If the number of errors is sufficiently few and/or the number of ECC bits are sufficiently many, then it may be possible to correct such errors introduced into the data. For example, in error correction schemes such as Reed Solomon codes, two ECC symbols may be used to locate and correct any one erroneous data symbol. Often, if errors cannot be corrected, the system memory may provide a poison indication or other signal to indicate that the data is poisoned, corrupted or has errors.

### BRIEF DESCRIPTION OF THE DRAWINGS

Various examples in accordance with the present disclosure will be described with reference to the drawings, in which:
**FIG. 1A** is a block diagram of an embodiment of a computer system in which embodiments of the invention may be implemented.
**FIG. 1B** is a block diagram illustrating the use of metadata and metadata dependent ECC according to an embodiment.
**FIG. 2** is a block diagram of an embodiment of an instruction set for a processor.
**FIG. 3** is a block flow diagram of an embodiment of a method of correcting one or more errors in data and paging out a page having the data and metadata to secondary storage.
**FIG. 4** is a block diagram of an embodiment of an apparatus that is operative to perform an embodiment of a get metadata instruction.
**FIG. 5** is a block flow diagram of an embodiment of a method of correcting one or more errors in data.
**FIG. 6** is a block diagram of an embodiment of an apparatus that is operative to perform an embodiment of a get data with errors instruction.
**FIG. 7** is a block diagram of an embodiment of an apparatus that is operative to perform an embodiment of a get ECC instruction.
**FIG. 8** illustrates an example computing system.
**FIG. 9** illustrates a block diagram of an example processor and/or System on a Chip (SoC) that may have one or more cores and an integrated memory controller.
**FIG. 10(A)** is a block diagram illustrating both an example in-order pipeline and an example register renaming, out-of-order issue/execution pipeline according to examples.
**FIG. 10(B)** is a block diagram illustrating both an example in-order architecture core and an example register renaming, out-of-order issue/execution architecture core to be included in a processor according to examples.
**FIG. 11** illustrates examples of execution unit(s) circuitry.
**FIG. 12** is a block diagram of a register architecture according to some examples.
**FIG. 13** illustrates examples of an instruction format.
**FIG. 14** illustrates examples of an addressing information field.
**FIG. 15** illustrates examples of a first prefix.
**FIGS. 16(A)****-(D)** illustrate examples of how the R, X, and B fields of the first prefix in FIG. 15 are used.
**FIGS. 17(A)****-(B)** illustrate examples of a second prefix.
**FIG. 18** illustrates examples of a third prefix.
**FIG. 19** is a block diagram illustrating the use of a software instruction converter to convert binary instructions in a source instruction set architecture to binary instructions in a target instruction set architecture according to examples.

### DETAILED DESCRIPTION OF EMBODIMENTS

In the following description, numerous specific details are set forth (e.g., specific instruction operations, sequences of operations, processor configurations, microarchitectural details, etc.). However, embodiments may be practiced without these specific details. In other instances, well-known circuits, structures, and techniques have not been shown in detail to avoid obscuring the understanding of the description.

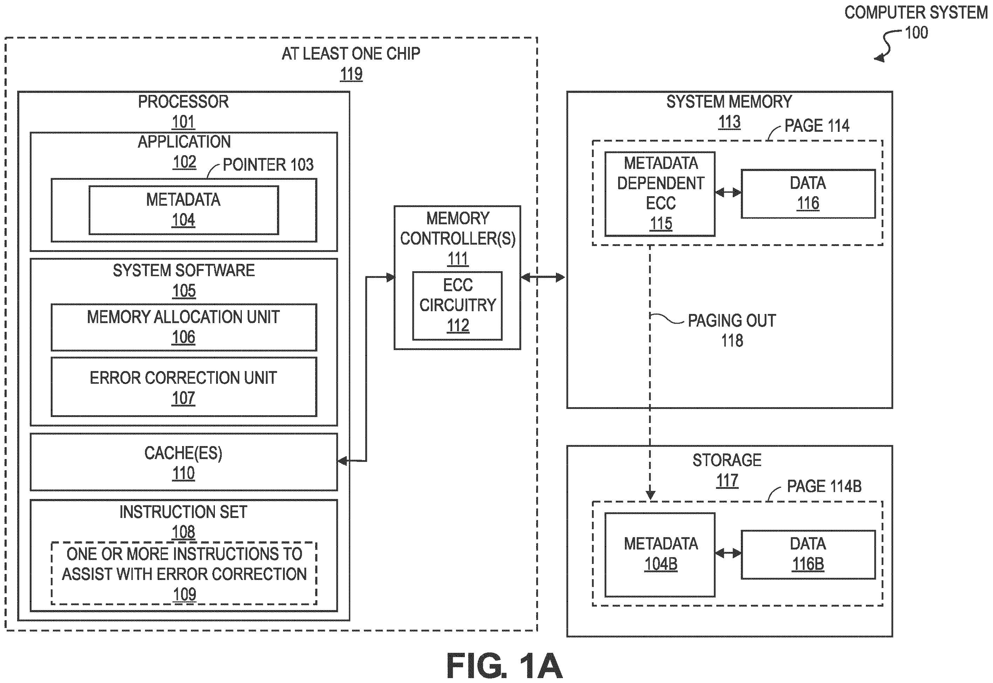

**FIG. 1A** is a block diagram of an embodiment of a computer system 100 in which embodiments of the invention may be implemented. In various embodiments, the computer system may represent a server, a desktop computer, a laptop computer, a tablet computer, a smartphone, a network device, a set-top box, a video game controller, or other type of computer system.

The computer system includes at least one chip (e.g., die) 119 including a processor 101. In some embodiments, the processor may be a general-purpose processor (e.g., a general-purpose microprocessor or central processing unit (CPU) of the type used in desktop, laptop, tablet, smartphone, server, or other computer systems). Alternatively, the processor may be a special-purpose processor. Examples of suitable special-purpose processors include, but are not limited to, network processors, communications processors, cryptographic processors, graphics processors, co-processors, embedded processors, and digital signal processors (DSPs), to name just a few examples. The processor may have any of various complex instruction set computing (CISC) architectures, various reduced instruction set computing (RISC) architectures, various very long instruction word (VLIW) architectures, various hybrids thereof, or other types of architectures.

The computer system also includes a system memory 113. The system memory is also sometimes referred to as main memory or primary memory. The processor and the system memory are coupled, or otherwise in communication with one another, through one or more memory controllers 111. The one or more memory controllers may also optionally be on the at least one chip 119. The coupling may include one or more buses or interconnects. In some embodiments, separate interconnects or paths may optionally be used between the memory controller and system memory with one being used to transfer data (e.g., from one set of DIMMs) and another being used to transfer ECC (e.g., from a set of ECC DIMMs_ so that data and ECC can be accessed in parallel. The system memory may include one or more types of memory and/or one or more types of memory devices. Examples of suitable types include, but are not limited to, random access memory (ROM) such as dynamic random-access memory (DRAM), read only memory (ROM) such as Programmable ROM (PROM), Erasable Programmable ROM (EPROM), and Electronically Erasable Programmable ROM (EEPROM), and combinations thereof. DRAM is commonly implemented via multiple memory modules known as Dual In-Line Memory Module (DIMMs) or RAM sticks. The memory controller circuitry may also perform various error correction methods on memory, such as DRAM, which offers additional devices for storing error correcting codes (ECC).

The processor may execute software, such as an application 102 and system software 105, such as a privileged operating system. The application may represent any of a wide variety of applications that are run on computer systems. The system software may include one or more operating systems (OSs). In some cases, the system software may also include one or more virtual machine monitors (VMMs). VMMs are also sometimes referred to as hypervisors.

The application 102 may access data 116 in the system memory 113 using a pointer 103 as a memory address. The data may have various sizes, such as, for example, 64-bits, 128-bits, 256-bits, 512-bits, 1024-bits, a fraction of a cache line, a cache line, multiple cache lines, and so on. Often, the size of the data may be less than the size of a page 114 in which the data may be included. Commonly, the system memory may also include parity bits or other error correction code (ECC) bits to help detect and correct errors that get introduced into the data. The ECC bits may effectively provide redundancy according to an error correction scheme. If the number of errors is sufficiently few and/or the number of ECC bits are sufficiently many, then it may be possible to correct such errors introduced into the data. For example, a Reed-Solomon code may locate and correct any one data symbol in error using two additional ECC symbols (where a symbol size may be, for example, 8 bits).

The pointer 103 may include a linear address, a virtual address, or other type of logical address. The logical address may be converted, through a process known as address translation, to a corresponding physical address that is used to access the physical location in the system memory where the data is stored. The pointer includes one or more bits of metadata 104. As used herein, the term metadata broadly refers to data that describes and/or provides information about other data. In various embodiments, the metadata may include from about 1 bit to about 15 bits, or in some cases from about 2 bits to about 12 bits. The one or more bits of metadata 104 may be stored in one or more bit positions of the pointer 103 that are not needed to store the bits of the logical address. In one example embodiment, the pointer may be a 64-bit pointer, which includes a 57-bit virtual address field in least significant bit positions [56:0] to store a 57-bit virtual address, and which includes one or more metadata bits in one or more of bit positions [62:57] when bit 63 is used as a user/supervisor bit or in one or more of bit positions [63:57] when bit 63 is not used as a user/supervisor bit. In another example embodiment, the pointer may be a 64-bit pointer, which includes a 48-bit virtual address field in least significant bit positions [47:0] to store a 48-bit virtual address, and which includes one or more metadata bits in one or more of bit positions [62:48] when bit 63 is used as a user/supervisor bit or in one or more of bit positions [63:48] when bit 63 is not used as a user/supervisor bit. In yet another example embodiment, the pointer may be a 64-bit pointer, which includes a virtual address field in least significant bit positions, and which includes four metadata bits in bit positions [59:56]. Pointer sizes may also be larger or smaller, such as 128 bit pointers or 32 bit pointers. Metadata stored in the pointer may be used for memory tagging, matching the tag value of the pointer to a metadata value used to compute the ECC for a memory line. Other embodiments may use a processor register, instead of a pointer, to hold the metadata. Such usages include compartmentalization where the metadata register may be controlled by system software and used to distinguish and isolate the memory of one software compartment from another. The metadata register content may be similarly used to compute the ECC for a memory line, binding the memory line to that metadata value. These are just a few illustrative examples.

In some embodiments, the data 116 may include a corresponding metadata dependent error correction code (ECC) 115 stored in the system memory. One or more bits of metadata (not shown) having the same value as the one or more bits of metadata 104 may bs used along with the data 116 to generate the metadata dependent ECC 115. The metadata dependent ECC broadly represents one or more bits or a value that is: (1) generated from and/or based on both the aforementioned metadata and the data 116; and (2) capable of correcting one or more errors in the data 116 when the aforementioned metadata is known or input. The error correction capabilities of the metadata dependent ECC may be tied to and/or dependent on the aforementioned value of the metadata used to generate the metadata dependent ECC. The metadata dependent ECC may also be regarded as ECC based on metadata, ECC based on a metadata symbol, a combined metadata and ECC value, a value generated based on both ECC and metadata, and the like.

The metadata dependent ECC may be generated in different ways in different embodiments. As one example, the metadata may be encoded in the metadata dependent ECC 115 by treating it as an additional hidden Reed-Solomon symbol along with the other Reed-Solomon symbols corresponding to the data 116. For example, if sixty-four Reed-Solomon symbols are used for 512-bits of data, one additional Reed-Solomon symbol may be used for the metadata, such that the metadata dependent ECC may be generated for the sixty-five Reed-Solomon symbols. In the case of the symbol having more bits than the metadata (e.g., 8-bit symbols and 4-bit metadata) the bits of the symbol not used for the metadata may all be given a same fixed or predetermined value (e.g., all zeroes, all ones, or any other predetermined value). Each tag value may be assigned to any hidden RS symbol value, as long as the mappings are all unique. An example mapping would be a 1-to-1 mapping with the upper bits not used for the metadata set to zero. For example, the 4-bit tag "0000" may correspond to the 8-bit RS symbol "00000000," the 4-bit tag "0001" may correspond to the 8-bit RS symbol "00000001," the 4-bit tag "1111" may correspond to the 8-bit RS symbol "00001111," and so on. In a DIMM with 8 data devices and 2 ECC devices of 64-bit width memory lines each, the 2 ECC devices may be sufficient to correct any one failed data device. An additional hidden symbol for the metadata may be viewed as a missing data device, which may likewise be recovered by the ECC. Similarly, any data symbol of 8 bits may be corrected using two ECC symbols of 8 bits, any data symbol of 16 bits may be corrected by two ECC symbols of 16 bits, and so on. Thus, metadata of the symbol size may likewise be recovered by two ECC symbols of the same size. In the case of the symbol having more bits than the metadata (e.g., 8-bit symbols and 4-bit metadata) the bits of the symbol not used for the metadata may all be given a same fixed or predetermined value (e.g., all zeroes, all ones, or any other predetermined value).

As another example, the metadata may be incorporated as a special bit pattern exclusive ORed (XORed) with the data prior to generation of the ECC on the result of the XOR. The pattern length should generally match the number of ECC bits. The patterns may be such that: (1) if checking ECC on a valid data plus ECC combination with an XOR pattern applied to the ECC, the algorithm should generally recognize it as an uncorrectable error with a specific syndrome S; (2) all such syndromes S for all XOR patterns should be unique; (3) any combination of two XOR patterns applied to a valid ECC plus data combination should generally be recognized as an uncorrectable error as well, to avoid interpreting tag mismatch as a correctable error.

The metadata 104 and the metadata dependent ECC 115 may be used in different ways in different embodiments. The scope of the invention is not limited to any particular way in which they are to be used. Nevertheless, a brief description of one possible use case will be provided to enhance the understanding of the description. In one use case, the metadata 104 may represent a memory tag or color assigned to the pointer 103, where the pointer includes a pointer tag field or portion. The memory tag or color may designate a portion (e.g., memory line of a cache line size) of the system memory that the pointer is allowed to access. For example, the pointer may be given a first color (e.g., red) and a subset of memory locations in the system memory intended to be used by the application may also be given the first color (e.g., red) whereas another subset of memory locations in the system memory not intended to be used by the application (or the pointer's assigned memory allocation) may be given other colors (e.g., blue, green, etc.). When the pointer is used to attempt to access the data 116, the memory tag or color assigned to the pointer (e.g., red) may effectively be compared for a match or other compatibility with the metadata dependent ECC. By way of example, if the metadata 104 of the pointer is compatible with the metadata used to generate the metadata dependent ECC 115, then the metadata dependent ECC 115 when applied to the data 116 should correct any errors in the data 116 and not introduce any errors into the data 116. In this case, no poison indication, ECC error, or other such indication of an error in the data may be returned to the processor 101. However, if the metadata 104 of the pointer is not compatible with the metadata used to generate the metadata dependent ECC 115, then the metadata dependent ECC 115 when applied to the data 116 may either not correct errors in the data 116, may determine the metadata dependent ECC is to be corrected (thereby determining the metadata provided by the pointer is not compatible with the metadata dependent ECC, or may introduce one or more uncorrectable errors into the data 116. In this case, a poison indication, ECC error, or other such indication of an error in the data may be returned to the processor 101. A lock-and-key type of security protection mechanism may be implemented in which the access to the data may be conditioned or controlled based on whether or not they are compatible. Access may be allowed if they are compatible. If they are not compatible, then access may be prevented and/or an exception or other exceptional condition or other signal may be raised to alert system software of the incompatibility. Other use cases are also possible. For example, in a second possible use case, the metadata and the metadata dependent ECC may be used to implement other types of security policies associated with accessing the data using the pointer. In a third possible use case, the metadata and the metadata dependent ECC may be used to implement compartmentalization, for example, by using a compartment ID register where the compartment ID is the metadata value and the system software configures the compartment ID register for a program running on a hardware thread such that it may access memory lines for the same compartment ID. In a fourth possible use case, the metadata and the metadata dependent ECC may be used to implement process consolidation, where different processes may be consolidate into one address space with one set of controlling page tables, but still separated using the metadata as a process ID and a processor register configured with the currently executing process ID. As mentioned, the scope of the invention is not limited to any particular use of the metadata and the metadata dependent ECC.

The metadata dependent ECC 115 effectively combines or encodes the metadata 104 and ECC for the data 116. Advantageously, combining or encoding both the metadata and the ECC may help to avoid needing to use additional bits to explicitly store the metadata separately from the ECC, such as in sequestered storage. As mentioned above, ECC bits are commonly provided anyway for the system memory so that it can provide error correction, and stealing bits from the ECC memory will result in worse error correction and reduce the robustness of systems to errors. An alternate approach could include explicitly storing the metadata in additional bits separate from the ECC bits. However, the use of such additional bits may tend to increase the cost of the system memory or implementation and/or may tend to increase power consumption. Also, an additional memory access, beyond the memory access used to access the data 116, may be needed to access the metadata stored in the additional bits separate from the ECC bits. Such an additional memory access may tend to reduce performance (e.g., take additional time, increase memory costs, consume additional memory access bandwidth) and/or may tend to increase power consumption. In contrast, the access to the metadata dependent ECC 115 may inherently be performed as a part of the memory access used to access the data 116 such that no additional memory access is needed. Also, the metadata dependent ECC combines or encodes both the metadata 104 and ECC for the data 116 in a way that does not sacrifice or eliminate the error correction capabilities of the ECC. An alternate approach could include "stealing" the ECC bits and using them to explicitly store the metadata without also encoding any ECC for the data in those bits. This approach does allow the metadata to be stored in the already present ECC bits and accessed in parallel without needing to use additional bits separate from the ECC bits. However, this approach sacrifices or eliminates the ECC for the data such that it may not be possible to correct errors in the data. Advantageously, the metadata dependent ECC combines or encodes both the metadata and ECC for the data without needing to use additional bits separate from the ECC bits and while retaining the error correction capabilities in the ECC bits. As shown, the memory controller(s) may include ECC circuitry 112 to correct errors in the data 116 based on the metadata dependent ECC and the metadata 104. In some embodiments, this may be used to allow the use of metadata while optionally maintaining full Chipkill and/or single device data correction (SDDC) capabilities, although the scope of the invention is not so limited. Chipkill refers to error checking and correcting memory technology to protect memory systems from any single memory chip failure as well as multi-bit errors from any portion of a single memory chip. Single Device Data Correction (SDDC) refers to an ECC technique to detect and correct single and (e.g., all) multi-bit errors occurring within a single DRAM chip. The information theoretic limit is two ECC symbols can correct any one data symbol error for the same symbol size, here we maintain that theoretic limit, while adding the ability to determine metadata.

As discussed above, the metadata used to generate the metadata dependent ECC 115 needs to be known and provided as an input for the metadata dependent ECC to be able to correct errors in the data 116. However, often the system software 105 may not know the metadata at the time when error correction needs to be performed. The system software (e.g., a memory allocation unit 106) may initially assign the metadata when allocating a memory location to store the data 116. However, the system software typically does not store or preserve the value of the metadata or the correspondence between the metadata and the data, particularly on a memory line by memory line basis. Additional memory would be needed to store the metadata and the correspondence and this is generally not used since it tends to increase cost and/or power consumption. Additionally, sometimes the page 114 having the data 116 may be paged out 118 of the system memory and stored as a page 114B having the metadata 104B and the data 116B in secondary storage 117 (where secondary storage is typically larger in capacity but slower than main memory, in addition to being persistent). That is, the page and the data may be moved out of the ECC protected system memory. The paging out to the storage is typically done through a device input/output subsystem. Sometimes, the page 114B may even be hibernated or migrated to a different computer system, as may be the case during migration of a virtual machine. Consequently, when an error is detected in the data 116 at a later point in time (e.g., during migration), the system software generally does not know the value of the metadata that was used to generate the metadata dependent ECC 115 especially on a memory line by memory line basis.

In some embodiments, the system software may include an error correction unit 107. In some embodiments, the error correction unit may employ new and useful methods and/or software and/or instructions assist with correcting errors in the data 116 (e.g., obtaining information needed to correct the errors and correcting the errors when the information is known). In some embodiments, an instruction set 108 of the processor may include one or more instructions 109 that the system software may use to assist with correcting errors in the data 116 (e.g., to obtain information needed to correct the errors). In embodiments, a memory controller implements error detection and correction in hardware coupled with the system memory 113. The processor may also include one or more caches 110 (e.g., a cache hierarchy) to cache data loaded from the system memory. As will be discussed further below, in some embodiments, the one or more caches may be used as destination storage locations for the instructions disclosed herein.

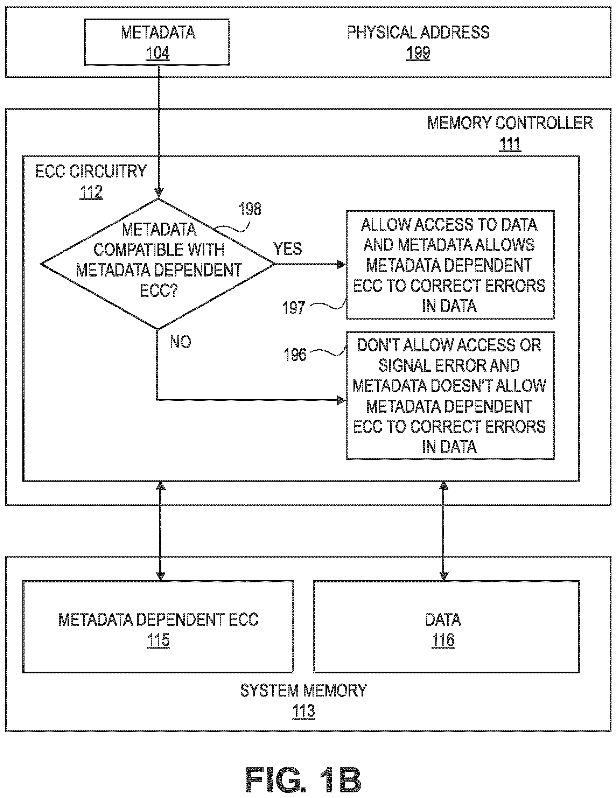

**FIG. 1B** is a block diagram illustrating the use of metadata and metadata dependent ECC according to an embodiment. A physical address may be used to access data 116 in system memory 113. The physical address may include metadata 104 (e.g., in most significant bits thereof). A memory controller 111 includes ECC circuitry 112. The ECC circuitry may receive the metadata 104. The ECC circuitry may also receive data 116 and metadata dependent ECC 115 corresponding to the data from the system memory. The memory controller and/or the ECC circuitry may be operative to use the metadata 104 to regulate or control in some way (e.g., through memory tagging, compartmentalization, etc.) access to the data 116 based on compatibility with the metadata dependent ECC 115. The memory controller and/or the ECC circuitry may also be operative to use the metadata 104 and the metadata dependent ECC 115 to correct one or more errors in the data 116. In some embodiments, the memory controller and/or the ECC circuitry may include circuitry to determine whether the metadata 104 is compatible with the metadata dependent ECC 115. In some embodiments, if the determination is that they are compatible (i.e., "yes") is the determination, the memory controller and/or the ECC circuitry at block 197 may allow access to the data 116 and may use the metadata and the metadata dependent ECC 115 to correct one or more errors in the data. In some embodiments, if the determination is that they are not compatible (i.e., "no") is the determination, the memory controller and/or the ECC circuitry at block 196 may not allow access to the data 116 and/or may signal an error and (depending partly on the number of errors in the data and the amount of metadata) in some embodiments may not use the metadata and the metadata dependent ECC 115 to correct one or more errors in the data.

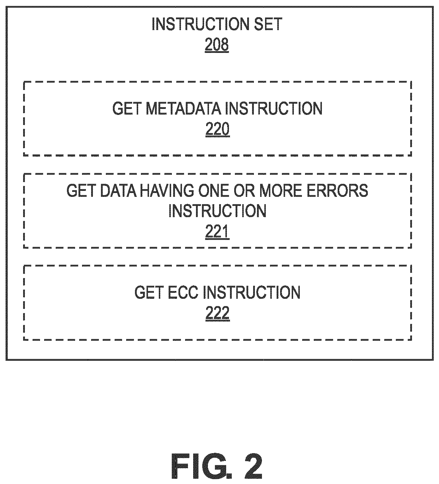

**FIG. 2** is a block diagram of an embodiment of an instruction set 208 for a processor. The instruction includes the instructions that the processor natively supports (e.g., can decode and execute). In some embodiments, the instruction set 208 may be used for the instruction set 108 of the processor 101 of **FIG. 1A****.**

In some embodiments, the instruction set may optionally include a get metadata instruction 220. The get metadata instruction when executed may be operative to cause a processor or other apparatus to attempt to determine or otherwise get a metadata value equal to that used to generate a metadata dependent ECC (e.g., the metadata dependent ECC 115) for data (e.g., the data 116).

In some embodiments, the instruction set may optionally include a get data having one or more errors instruction 221. The get data having one or more errors instruction when executed may be operative to cause a processor or other apparatus to load or get data having one or more errors (e.g., the data 116). For example, this may be done if the number of data errors is such that the metadata value needs to be known in order to fully recover the data. In some embodiments, this may include bypassing application of a corresponding ECC (e.g., the metadata dependent ECC 115) error correction to the data having the one or more errors. In some embodiments, the get data having one or more errors instruction when executed may also optionally be operative to cause the apparatus to load or get ECC (e.g., the applicable portion of the metadata dependent ECC 115) corresponding to the data portion.

In some embodiments, the instruction set may optionally include a get ECC instruction 222. The get ECC instruction when executed may be operative to cause a processor or other apparatus to load or get the error correction codes (e.g., the metadata dependent ECC 115) corresponding to data (e.g., the data 116). In some embodiments, the get ECC instruction when executed may also optionally be operative to cause the apparatus to load or get data having one or more errors (e.g., the data 116). In some embodiments, the loading or getting of the data portion having the one or more errors may bypass application of a corresponding error correction codes (e.g., the metadata dependent ECC 115) to the portion of data having the one or more errors. It should be understood that either the data portion or the error correction codes portion, or both, may have errors.

In various embodiments, the instruction set may include from only any one of the get metadata instruction 220, the get data having one or more errors instruction 221, and the get ECC instruction 222 to all three of these instructions. One or more of these instructions may optionally be included in the instruction set to allow software (e.g., the system software 105) to get a metadata value equal to that used to generate a metadata dependent ECC, data having one or more errors, and ECC (e.g., metadata dependent ECC) to correct errors.

Instructions intended to perform such functions from the memory controller may cause the processor to generate a physical memory address with a command field that determines the operation of the memory controller. For example, setting the most significant physical address bit may indicate to the memory controller that a special operation is to be performed for the memory location corresponding to the remainder of the physical memory address. The memory controller may then return a cache line for the physical memory address with the most significant bit set containing the associated metadata indicated by the most significant bit (e.g., get metadata, get erroneous data and/or get ECC).

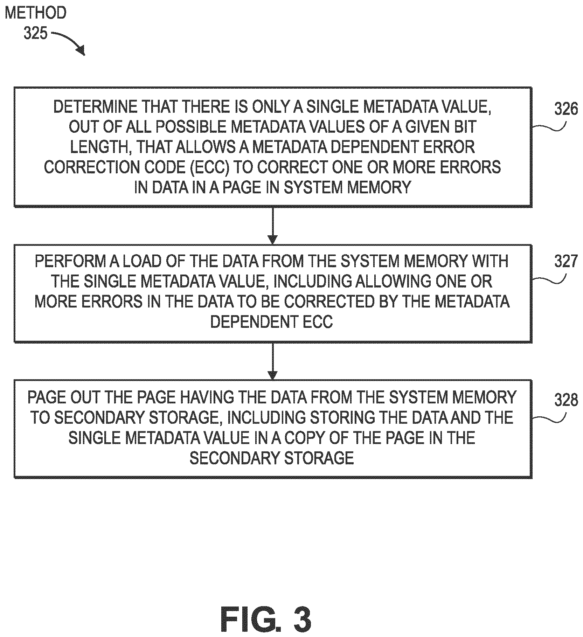

**FIG. 3** is a block flow diagram of an embodiment of a method 325 of correcting one or more errors in data and paging out a page having the data and metadata to secondary storage. In some embodiments, the method may be performed by system software (e.g., an OS, a VMM), such as, for example, the system software 105.

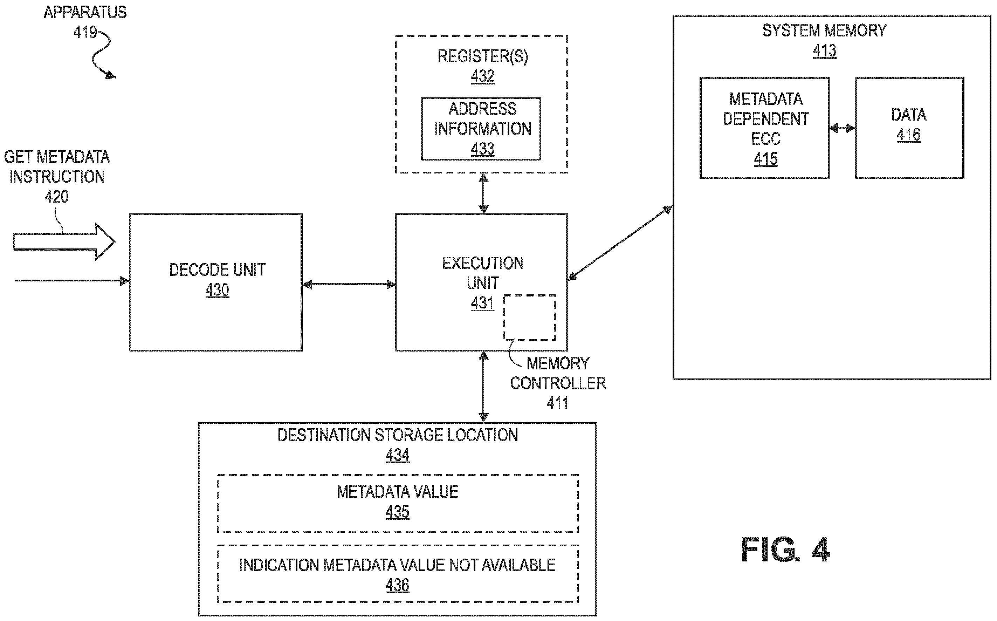

The method includes determining that there is only a single metadata value, out of all possible metadata values of a given bit length, which allows a metadata dependent ECC to correct one or more errors in data in a page in system memory, at block 326. In embodiments, block 326 may be performed by the ECC logic of the memory controller. In some embodiments, this may include using the get metadata instruction 420 of **FIG. 4****.** In other embodiments, the system software may perform multiple instructions to perform operations the same as or similar to those described for the get metadata instruction 420 to effectively emulate or mimic or reproduce operations like those described for the get metadata instruction 420 (e.g., in case it is not included in an instruction set of a processor). For example, system software may generate multiple addresses with alternate memory tag values to determine that only one memory tag value matches for a memory line and all alternate memory tag values return in error (e.g., the memory controller indicating the cache line is poisoned with an uncorrectable error).

The method includes performing a load of the data from the system memory with the single metadata value, at block 327. In some embodiments, the load of the data with the single metadata value may allow the metadata dependent ECC to correct one or more errors in the data.

The method also includes system software paging out the page having the data from the system memory to secondary storage, at block 328. This may include storing the data and the single metadata value in a copy of the page in the secondary storage (e.g., a solid-state drive (SSD) attached to the IO subsystem of the processor 101). In some embodiments, this may optionally be performed as part of hibernating an operating system, virtual machine, secure virtual machine, or the like. In some embodiments, the method may optionally include migrating the page having the single metadata value and the data from a source computer system to a destination computer system (e.g., in conjunction with migration of a virtual machine, a secure virtual machine, etc.).

**FIG. 4** is a block diagram of an embodiment of an apparatus 419 (e.g., at least one chip) that is operative to perform an embodiment of a get metadata instruction 420. In some embodiments, the get metadata instruction may be used by software (e.g., the system software 405) to load or obtain metadata 435 used to generate a metadata dependent ECC 415 corresponding to data 416 having no errors or one or more errors. The metadata dependent ECC 415 and the data 416 may be similar to or the same as the metadata dependent ECC 115 and data 116 described above.

In some embodiments, the apparatus 419 may be used in the computer system 100 of **FIG. 1A****.** Alternatively, the apparatus 419 may be used in different computer systems. The apparatus 419 may include a processor 401 of the various types of processors described above for the processor 101 (e.g., a microprocessor, CPU, or other general-purpose processor, any of the previously described types of special purpose processors, have a CISC, RISC, VLIW architecture, etc.). In some embodiments, the apparatus 419may include (e.g., be disposed on) at least one integrated circuit or semiconductor die. In some embodiments, the apparatus 419may include at least some hardware (e.g., transistors, capacitors, circuitry, non-volatile memory storing circuit-level instructions/control signals).

The apparatus 419may be coupled to receive the get metadata instruction 420. For example, the apparatus may have an instruction cache (not shown) to store the instruction prefetched, fetched, or otherwise received from memory. The get metadata instruction may represent a macroinstruction, machine code instruction, or other instruction of an instruction set of a processor. The get metadata instruction may have various formats or encodings, such as, for example, those described further below. The get metadata instruction may have one or more fields for an opcode that at least partially or fully specifies the operation to be performed (e.g., to attempt to get or determine metadata 435 corresponding to the metadata dependent ECC 415).

In some embodiments, the get metadata instruction 420 may explicitly specify (e.g., through one or more fields or a set of bits) and/or otherwise indicate (e.g., implicitly indicate) address information 433 corresponding to data 416 having no errors, one or more correctable errors and/or useful to generate an address of a memory location storing the data 416 having the no errors, one or more correctable errors in system memory. Such address information may be indicated in many ways and according to various different memory addressing modes. For example, the instruction may have a field or set of bits to specify a general-purpose register or other scalar register storing address information. As another example, it may be implicit to the instruction to use address information from a segment register or other type of memory addressing register. As shown, one or more registers 432 (e.g., of the processor) may optionally store the address information. As yet another example, the instruction may an immediate in its encoding to provide address information. Embodiments may simply use one or more bits in the physical memory address where the processor uses those address bits to communicate to the memory controller that the get metadata operation is to be performed for the memory location corresponding to the remainder of the physical address bits, and the memory controller will return a cache line for the full physical memory address containing the metadata or otherwise indicate an error if the metadata cannot be recovered due to too many data errors. Various combinations of these approaches may be used in different embodiments.

In some embodiments, the get metadata instruction may also explicitly specify (e.g., through one or more fields or a set of bits) and/or otherwise indicate (e.g., implicitly indicate) a destination storage location 434 where a determined metadata value 435 (e.g., if one can be suitably determined) is to be stored. In some embodiments, the destination storage location may be in a cache of the processor (e.g., the destination storage location may be a location in the cache corresponding to the memory location used to store the data corresponding to the physical memory address). In other embodiments, the destination storage location may be a register of the processor (e.g., a general-purpose register, a scalar register, a vector register, etc.).

As used herein, the term registers refers to architectural registers or architecturally-visible registers that are visible to software and/or a programmer and/or are the registers indicated by instructions of the instruction set of the processor to identify operands or communicate commands and/or data from the processor over bus interfaces. These architectural registers are contrasted to other non-architectural registers in a microarchitecture (e.g., temporary registers, reorder buffers, retirement registers, etc.). These registers may be implemented in different ways in different microarchitectures and are not limited to any particular design. Examples of suitable types of registers include, but are not limited to, dedicated physical registers, dynamically allocated physical registers using register renaming, and combinations thereof.

Referring again to **FIG. 4****,** the apparatus includes a decode unit 430. The decode unit may be coupled to receive the get metadata instruction 420. The decode unit may be operative to decode the get metadata instruction into one or more lower-level control signals, operations, or decoded instructions (e.g., one or more micro-instructions, micro-operations, micro-code entry points, or the like). In some embodiments, the decode unit may include at least one input structure (e.g., a port, interconnect, or interface) coupled to receive the get metadata instruction, an instruction recognition and decode logic or circuitry coupled therewith to recognize and decode the get metadata instruction into the one or more lower-level control signals, operations, or decoded instructions, and at least one output structure (e.g., a port, interconnect, or interface) coupled therewith to output the one or more lower-level control signals, operations, or decoded instructions. The decode unit and/or its instruction recognition and decode logic or circuitry may be implemented using any of various types of instruction decode mechanisms including, but not limited to, microcode read only memories (ROMs), look-up tables, hardware implementations, programmable logic arrays (PLAs), other mechanisms suitable to implement instruction decode unit, and combinations thereof. In some embodiments, the decode unit may include at least some circuitry and/or hardware (e.g., transistors, integrated circuitry, on-die read-only memory or other non-volatile memory storing microcode or other hardware-level instructions, or a combination thereof). In some embodiments, the decode unit may be included on a die, integrated circuit, or semiconductor substrate.

The apparatus also includes an execution unit 431. The execution unit is coupled with the decode unit 430 (e.g., to receive the one or more lower-level control signals, operations, or decoded instructions). The execution unit is also coupled to receive the indicated address information 433 corresponding to the data 416 having the one or more errors and/or useful to generate an address of a memory location storing the data 416 having the one or more errors in system memory 413. For example, the execution unit may be coupled with the one or more registers 432 optionally used to store the address information. In some embodiments, the execution unit may be on a die or integrated circuit along with the decode unit. The execution unit may be operative to perform operations corresponding to the get metadata instruction. For example, the execution unit may execute the lower-level control signals, operations, or decoded instructions which may cause or control the execution unit to perform the operations corresponding to the instruction. In some embodiments, the operations may correspond to and/or be specified by the opcode of the get metadata instruction. In some embodiments, the execution unit may include at least one memory controller 411 having error correction circuitry to perform error correction in conjunction with executing the get metadata instruction. In some embodiments, the execution unit (e.g., the memory controller) may optionally be coupled with the system memory via separate interconnects or paths with one being used to transfer data (e.g., from one set of DIMMs) and another being used to transfer ECC (e.g., from a set of ECC DIMMs_ so that data and ECC can be accessed in parallel.

As used herein, the term "execution unit" broadly represents the collection of circuitry or other logic (e.g., hardware such as integrated circuitry and/or firmware such as low level instructions or control signals stored in non-volatile memory) to execute or perform an instruction. The term execution unit does not imply, and is not limited to, a single discrete unit within a core executing or performing all the operations. Rather, the execution unit may include separate or distributed circuitry or other logic that are distributed throughout a processor and a memory access subsystem (e.g., one or more memory controllers) that are controlled based on the instruction to work together and collectively represent the execution unit used to execute or perform the instruction. In the case of certain instructions disclosed herein, it may also be stated that a memory access subsystem and/or memory access circuitry and/or a memory interface represent the execution unit to perform the instruction.

In some embodiments, the operations may include to determine whether there is only a single metadata value 435 (e.g., a metadata symbol value), out of all possible metadata values of a given bit length, which allows the metadata dependent error correction code (ECC) 415 to correct the one or more errors in the data 416. As previously described, the metadata dependent ECC 415 may correspond to the data 416 and may be stored in the system memory 413 along with the data. In some embodiments, the operations may include storing the single metadata value 435 in a destination storage location 434 if the determination is that there is only the single metadata value. In some embodiments, the destination storage location may be a cache of the processor (e.g., a location in a cache corresponding to the location of the data). In other embodiments, the destination storage location may be a register of the processor (e.g., a general-purpose register, a scalar register, a vector register, etc.). Or, in some embodiments, the operations may include to indicate the determination is that there is not only the single metadata value. This may be done in different ways in different embodiments. As one example, this may include storing a status code, return code, special value, or some other indication 436 that the metadata is not available in the destination storage location 434. As one specific example, a predetermined value (e.g., all zeroes, all ones, or some other predetermined value) larger than or otherwise capable of being distinguished from the metadata value 435 may optionally be stored in a cache, register, or other destination storage location. As another example, storing multiple different metadata values or all possible metadata values may also serve as such an indication. In other embodiments, a first type of indication (e.g., a first signal or first predetermined value) may optionally be used to indicate that none of all possible metadata values allow the metadata dependent ECC to correct the errors and a second type of indication (e.g., a second signal or second predetermined value) to indicate that two or more of all possible metadata values allow the metadata dependent ECC to correct the errors.

In other embodiments, instead of getting just the single metadata value 435 for the single data 416, multiple metadata values may optionally be analogously obtained for multiple corresponding data. This may speed up the process of getting metadata values when multiple need to be obtained rather than getting each with a single instruction. For example, two, three, four, ten, twenty, sixty-four, one hundred twenty-eight, or more metadata values like the metadata value 435 may optionally be obtained and stored. As one example, a number of metadata values may be obtained as a number of data 416 that fit in a page or two pages. As another example, a number of metadata values may be obtained as the number that fits in the destination storage location 434 (e.g., a cache line). No matching metadata symbols may be the result of an uncorrectable memory error.

Different ways are possible to determine whether there is only the single metadata value 435, out of said all possible metadata values of the given bit length, which allows the metadata dependent ECC 415 to correct the one or more errors in the data 416. In some embodiments, such a determination may include to: (1) determine there is only the single metadata value 435 if the metadata dependent ECC 415 corrects the one or more errors in the data 416 for only one of said all possible metadata values of the given bit length; or (2) determine there is not only the single metadata value 435 (e.g., and therefore provide the indication 436) if no metadata dependent ECC can be found that corrects the one or more errors in the data 416 for any of said all possible metadata values of the given bit length or at least two metadata values out of all possible metadata values of the given bit length are found that correct the one or more errors in the data 416. In some embodiments, such a determination may include to: (1) perform a different attempted access to the data 416 with each of said all possible metadata values (e.g., each included in a different corresponding pointer tag); and (2) determine there is only the single metadata value 435 if an indication that the data 416 has an error (e.g., after application of the metadata dependent ECC 415 to the data 416) is not returned for only one of the attempted accesses; or (2) determine there is not only the single metadata value 435 if an indication that the data has an error (e.g., after application of the metadata dependent ECC 415 to the data 416) is not returned for zero or at least two of the attempted accesses. As another option, instead of performing the different accesses, the metadata value could be calculated mathematically in software. For example, the software may mathematically emulate or reproduce the ECC process performed by the hardware using all possible metadata values. The memory controller, when the metadata value can be determined, may return the metadata value (e.g., the metadata symbol value), as will be discussed further below.

As one illustrative example, for metadata having a length of 3 bits, such a determination may include to perform eight attempted loads of the data 416, each with a different corresponding one of all eight different possible metadata values (i.e., 000, 001, 010, 011, 100, 101, 110, and 111). For example, a different one of these eight metadata values may be included in the upper bits a different corresponding one of eight pointers each having a linear/virtual address translating to the physical address of the memory location storing the data. For each of the loads, the inputs to the error correction mechanism may include the metadata value, the data 416 having one or more errors, and the metadata dependent ECC value 415. For each of the loads, the error correction mechanism may attempt to correct the errors in the data based on the metadata dependent ECC value 415 and the input metadata, and may provide an indication of whether the one or more errors could be corrected. By way of example, this indication may be a poison indication, an ECC error indication, or other such indication to indicate that one or more errors could not be corrected. The lack of such an indication may represent an indication that the errors were corrected. In some embodiments, the characteristics of the ECC (e.g., based on the algorithm) may be such that there should be one and only one metadata value, out of all eight possible metadata values, which results in no indication of errors in the data being provided. That one metadata value should be the same metadata value that was used to generate the metadata dependent ECC 415. However, it is possible that none of the set of all possible metadata values result in no indication of errors in the data being provided. It is also possible that two or more of the set of all possible metadata values result in no indication of errors in the data being provided. Each of these latter two scenarios indicate that the sought single metadata value has not been suitably determined. This may happen, for example, if there are too many errors in the data 416 to be corrected using the metadata dependent ECC 415, if the error correction mechanism is defective, or for some other reason. In which case, it may not be possible to determine the appropriate metadata value using this instruction in which case the erroneous data and ECC may be maintained until a point in time the metadata value can be determined and the metadata restored such that all ECC symbols may be utilized for correcting the data errors.

In some embodiments, the get metadata instruction 420 may optionally be a privileged-level instruction that is only executable at a level of privilege that is higher than a user-level privilege (e.g., executable by an OS, VMM, or other system software but not by user-level applications), although this is not required for other embodiments. This may optionally be the case to help prevent an unintended user-level application from using the get metadata instruction to get metadata for data it is not intended to access.

The execution unit 431 and/or the apparatus 419 may include specific or particular logic (e.g., transistors, integrated circuitry, or other hardware potentially combined with firmware (e.g., instructions stored in non-volatile memory) and/or software) that is operative to perform the operations corresponding to the get metadata instruction 420 (e.g., in response to one or more lower-level control signals, operations, or decoded instructions that have been decoded from the get metadata instruction). By way of example, the execution unit may include a load unit or circuitry, a load/store unit or circuitry, a memory access unit or circuitry, or the like. In some embodiments, the execution unit may include one or more input structures (e.g., a port, interconnect, or interface) coupled to receive address information, address generation circuitry or logic, memory access circuitry or logic, and one or more output structures (e.g., a port, interconnect, or interface) coupled therewith to store the determined metadata.

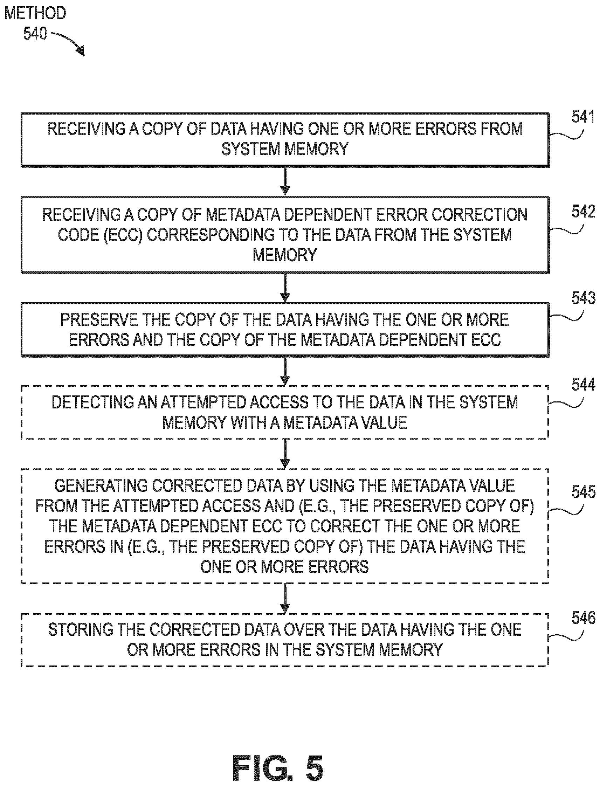

FIG. 5 is a block flow diagram of an embodiment of a method 540 of correcting one or more errors in data in the case where an appropriate metadata value cannot be determined. In some embodiments, the method may be performed by system software (e.g., an OS, a VMM), such as, for example, the system software 105.

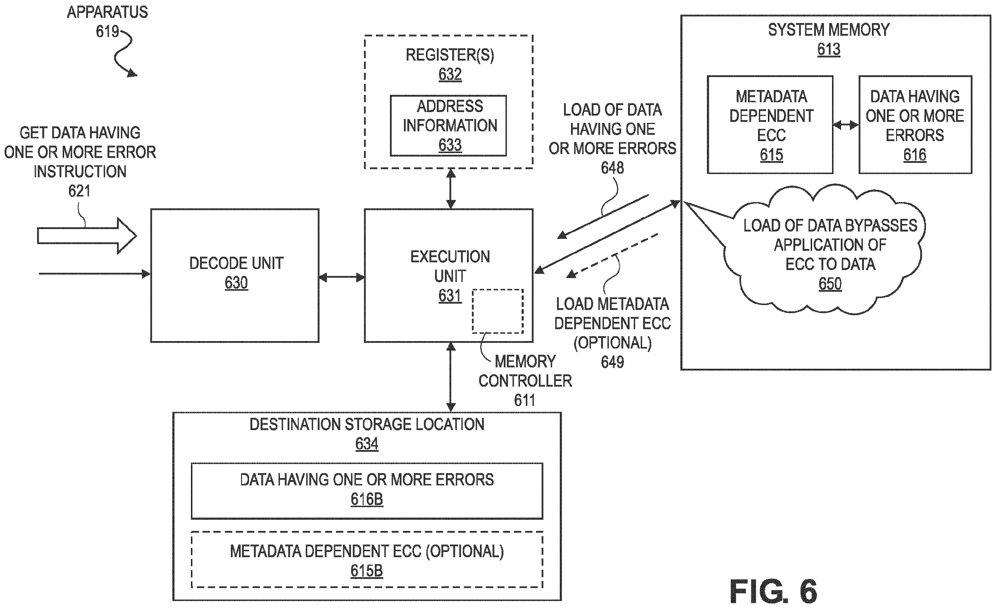

The method includes receiving a copy of data having one or more errors from system memory, at block 541. In some embodiments, this may include using the get data with errors instruction 621 of FIG. 6, although this is not required.

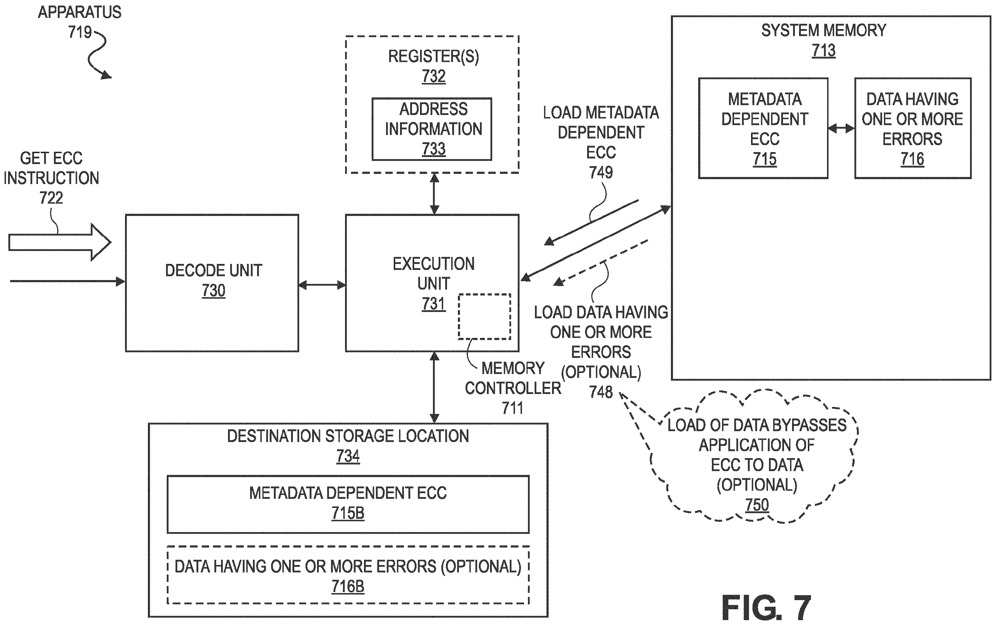

The method includes receiving a copy of metadata dependent error correction code (ECC) corresponding to the data from the system memory, at block 542. In some embodiments, this may include using the get ECC instruction 722 of **FIG. 7****,** although this is not required.

The method includes storing or otherwise preserving the copy of the data having the one or more errors and the copy of the metadata dependent ECC, at block 543. By way of example, the system software may store these values in a table or other datastructure along with other data and metadata dependent ECC for other memory locations. In some cases, these values may be stored in storage 117 as part of paging or hibernating the system or may be communicated across a network as part of migrating a VM. This may represent obtaining and preserving information needed for and/or sufficient for error correction once the relevant metadata is known. The system software may then postpone the error correction and wait to a point in time when the metadata is known. For example, in the case of memory tagging, the pointer tag will become known when the application attempts to access a memory location using a tagged pointer. When this operation occurs, the metadata value is again known and the data errors (that could not be corrected without knowledge of the metadata value) may then be corrected.

The method optionally includes detecting an attempted access to the data in the system memory with a metadata value, at block 544. This may be done in different ways in different embodiments. In some embodiments, this may include the system software monitoring for an access to or otherwise observing an access to the location storing the data having the one or more errors. In other embodiments, the system software may implement a change or configuration in the system to cause a fault or other exceptional condition upon the attempted access to the data in the system memory. As one example, the system software may mark a relevant page table entry of a page table to indicate the page having the data is not present in the system memory so the attempted access will trigger a page fault. However, this may tend to be less performant when many lines are accessed for a page since they will result in a page fault and emulation until all such lines are corrected. As another example, the system software may change or overwrite the metadata dependent ECC so that it has a predetermined value that is carved out and used to designate or mark that the data has errors and needs to be corrected. When accessing the data, the computer system (e.g., the memory controller) may observe this predetermined value and determine that the data has errors and needs to be corrected. As another option, one or more poison bits could be included for the data and could be adjusted to designate or mark that the data has errors and needs to be corrected as memory controllers can write back a line to memory that indicates the line is poisoned.

The method optionally includes generating corrected data by using the metadata value from the attempted access and the preserved copy of the metadata dependent ECC to correct the one or more errors in the preserved copy of the data having the one or more errors, at block 545.

The method optionally includes storing the corrected data over the data having the one or more errors in the system memory, at block 546.

It is to be appreciated that the method 540 is only one illustrative example. Other methods are also contemplated. For example, in the method 540 the system software uses the preserved copies of the metadata dependent ECC and data having the one or more errors to generate the corrected data. As another option, instead of the system software correcting the data, the system software may use the metadata value from the attempted access in an access to the system memory and let the system memory generate the corrected data using the metadata dependent ECC and the data resident in the memory instead of using the preserved values. Also, as another option, instead of the system software performing such an operation, the attempted access could be allowed instead of prevented and that access with the metadata value could be used to correct the errors in the data. However, in some cases allowing the system software to correct the errors as shown in the illustrated method 540 may offer an advantage that it can be used even when the data is migrated to a different machine that uses a different error correction scheme. The system software can account for the different error correction scheme but the different hardware used to implement the different error correction scheme may not be easily able to.

**FIG. 6** is a block diagram of an embodiment of an apparatus 619 (e.g., at least one chip) that is operative to perform an embodiment of a get data with errors instruction 621. In some embodiments, the get data with errors instruction may be used by software (e.g., system software) to load or obtain data having errors. By way of example, this may be done to collect and preserve the data having the error(s) so that the error(s) can be corrected at a later point in time (e.g., when the metadata used to generate the metadata dependent ECC is known).

The apparatus may include a processor that is the same as, similar to, or different than, the processor 101 of **FIG. 1A****.** The apparatus includes a decode unit 630 that is operative to decode the get data with errors instruction 621, an execution unit 631 that is operative to perform operations corresponding to the get data with errors instruction. Aside from aspects described below pertaining to the get data with errors instruction, unless otherwise specified, the processor, decode unit, and execution unit may optionally be the same as or similar to (e.g., have any one or more characteristics that are the same or similar to) the correspondingly named components of **FIG. 4****.** To avoid obscuring the description, the different and/or additional characteristics of the embodiment of **FIG. 6** will primarily be described, without repeating all the characteristics which may optionally be the same or similar to those described for the embodiment of **FIG. 4****.**

The apparatus 619 may receive the get data with errors instruction 621. The get data with errors instruction may represent a macroinstruction, machine code instruction, or other instruction of an instruction set of a processor. The get data with errors instruction may have various formats or encodings, such as, for example, those described further below. The get data with errors instruction may have one or more fields for an opcode that at least partially or fully specifies the operation to be performed (e.g., to load or obtain data having one or more errors).

In some embodiments, the get data with errors instruction 621 may explicitly specify (e.g., through one or more fields or a set of bits) and/or otherwise indicate (e.g., implicitly indicate) address information 633 corresponding to the data 616 having the one or more errors and/or useful to generate an address of a memory location storing the data 616 having the one or more errors in system memory 613. Such address information may be indicated by the get data with errors instruction in any of the many ways already described for the get metadata instruction. As shown, one or more registers 632 of the processor may optionally store the address information. In some embodiments, the get data with errors instruction may also explicitly specify (e.g., through one or more fields or a set of bits) and/or otherwise indicate (e.g., implicitly indicate) a destination storage location 634 where the data having the one or more errors is to be stored. In some embodiments, the destination storage location may be in a cache of the processor (e.g., the destination storage location may be a location in the cache corresponding to the memory location used to store the data). In other embodiments, the destination storage location may be a register of the processor (e.g., a general-purpose register, a scalar register, a vector register, etc.).

The apparatus 619 includes the decode unit 630 coupled to receive the get data with errors instruction 621. The decode unit may be operative to decode the get data with errors instruction into one or more lower-level control signals, operations, or decoded instructions. In some embodiments, the decode unit may include at least one input structure (e.g., a port, interconnect, or interface) coupled to receive the get data with errors instruction, an instruction recognition and decode logic or circuitry coupled therewith to recognize and decode the get data with errors instruction into the one or more lower-level control signals, operations, or decoded instructions, and at least one output structure (e.g., a port, interconnect, or interface) coupled therewith to output the one or more lower-level control signals, operations, or decoded instructions. The decode unit and/or its instruction recognition and decode logic or circuitry may be implemented using any of various types of instruction decode mechanisms including, but not limited to, microcode read only memories (ROMs), look-up tables, hardware implementations, programmable logic arrays (PLAs), other mechanisms suitable to implement instruction decode unit, and combinations thereof. In some embodiments, the decode unit may include at least some circuitry and/or hardware (e.g., transistors, integrated circuitry, on-die read-only memory or other non-volatile memory storing microcode or other hardware-level instructions, or a combination thereof). In some embodiments, the decode unit may be included on a die, integrated circuit, or semiconductor substrate.

The apparatus 619 also includes the execution unit 631. The execution unit is coupled with the decode unit 630 (e.g., to receive the one or more lower-level control signals, operations, or decoded instructions). The execution unit is also coupled to receive the indicated address information 633 corresponding to the data 616 having the one or more errors and/or useful to generate an address of a memory location storing the data 616 having the one or more errors in system memory. For example, the execution unit may be coupled with one or more registers storing such address information. In some embodiments, the execution unit may be on a die or integrated circuit along with the decode unit. The execution unit may be operative to perform operations corresponding to the get data with errors instruction. For example, the execution unit may execute one or more lower-level control signals, operations, or decoded instructions which may cause or control the execution unit to perform the operations corresponding to the get data with errors instruction. In some embodiments, the operations may correspond to and/or be specified by the opcode of the get data with errors instruction. In some embodiments, the execution unit may include at least one memory controller 611 controlled by the get data having one or more errors instruction to load the data having the one or more errors 616. In some embodiments, the execution unit (e.g., the memory controller) may optionally be coupled with the system memory via separate interconnects or paths with one being used to transfer data (e.g., from one set of DIMMs) and another being used to transfer ECC (e.g., from a set of ECC DIMMs_ so that data and ECC can be accessed in parallel.

In some embodiments, the operations may include loading 648 the data 616 having one or more errors from the system memory 613. In some embodiments, only half or only another portion of the data may optionally be loaded, although this is not required. In some embodiments, as shown by callout 650, this may include bypassing application of a corresponding error correction code (ECC) (e.g., metadata dependent ECC 615) to the data having the one or more errors (e.g., bypassing attempting to correct the one or more errors in the data 616 using the ECC). In some embodiments, the ECC may be a metadata dependent ECC 615. That is, the data 616 having the one or more errors may be loaded in its present form even though it has the one or more errors and without being error corrected or otherwise changed based on the metadata dependent ECC 615 or other ECC. One possible reason for this is that the metadata dependent ECC or other ECC may be insufficient to faithfully correct the one or more errors in the data and the intention of the system software may be to capture and preserve the data having the one or more errors until a later point in time when metadata used to create metadata dependent ECC is known and the ECC can then be used to correct the one or more errors in the data. In some embodiments, the operations may also include storing the data 616B having one or more errors in a destination storage location 634. In some embodiments, the destination storage location may be a cache of the processor (e.g., a location in a cache corresponding to the location of the data having the one or more errors). In other embodiments, the destination storage location may be a register of the processor (e.g., a general-purpose register, a scalar register, a vector register, etc.).

In some embodiments, the execution unit 631 may load the data 616 having one or more errors even when it does not know the metadata (e.g., the metadata used to generate the metadata dependent ECC 615). As previously described, some uses of metadata may include a lock-and-key type of security protection mechanism in which the access to the data may be controlled or conditioned on a memory tag, color, or metadata provided with the pointer matching or otherwise being compatible with metadata corresponding to the data 616 (e.g., a metadata dependent ECC 615). Other uses are similarly based on other types of access restrictions based on compatibility of metadata provided in the pointer with metadata corresponding to the data. However, an intended possible use case of the get data with errors instruction 621 is for software to get the data 616 having the errors even when it does not know the value of such metadata. Accordingly, in some embodiments, the get data with errors instruction may have special privileges to allow or control the execution unit to load the data having the one or more errors even when the software using the get data with errors instruction does not know the metadata. In some embodiments, the data may be loaded with a pointer or physical address that does not have an associated memory tag, color, compartment ID, process ID or other metadata value and/or the access to the data having the errors may not provide a metadata value to be compared with metadata corresponding to the data (e.g., the metadata dependent ECC 615). In such embodiments, the comparison for a match or compatibility may also optionally be skipped. Alternatively, the comparison for compatibility may optionally be performed, but a result of the comparison may not condition or prevent the ability to load the data. In other embodiments, the data maybe loaded with a pointer or physical address that does have an associated memory tag, color, or other metadata value but it may be an incorrect, arbitrary, or default metadata value and the load of the data having the errors may still be allowed irrespective of the metadata value provided. In some such embodiments, the comparison for a match or compatibility may optionally be skipped. Alternatively, the comparison may optionally be performed, but a result of the comparison may not condition or prevent the ability to load the data.

In some embodiments, the operations may also optionally include loading the ECC (e.g., the metadata dependent ECC 615) from the system memory, although this is optional not required. In some embodiments, only half or only another portion of the ECC may optionally be loaded if only half or only another portion of the data was loaded, although this is not required. In some embodiments, the operations may also optionally include storing the ECC (e.g., the metadata dependent ECC 615B) in either the destination storage location or a second destination storage location. The same type of destination storage locations is suitable (e.g., in a cache, in a register, etc.). In some embodiments, such a combined instruction may fetch half the erroneous data and half of the associated error correction codes for the erroneous data on the same cache line to be returned to the processor.

In some embodiments, the data 616 having the one or more errors and the ECC (e.g., the metadata dependent ECC 615) may optionally be loaded and stored together as a plurality of operations that are performed atomically. Performing operations atomically means that the operations are either all performed or none of them are performed but only some of the operations are not performed without performing other of the operations. Such atomicity may help to ensure that the data having the errors that is loaded and the ECC that is loaded are mutually consistent with one another and that no intervening operations occur between the loads of the data and the ECC that could change one of them. Alternatively, fences or other approaches may be used to make such assurances.

In some embodiments, the operations may also optionally include to indicate that the data 616 having the one or more errors needs to be corrected. This may be done in different ways in different embodiments. As one example, the system software may mark a relevant page table to indicate the page having the data is not present in the system memory so the attempted access will trigger a page fault. As another example, the system software may change or overwrite the metadata dependent ECC so that it has a predetermined value that is carved out and used to designate or mark that the data has errors and needs to be corrected. When accessing the data, the computer system (e.g., the memory controller) may observe this predetermined value and determine that the data has errors and needs to be corrected. As another option, one or more poison bits could be included for the data and could be adjusted to designate or mark that the data has errors and needs to be corrected. In some embodiments, the processor may have a new instruction in its instruction set to store such a predetermined value to the metadata dependent ECC. ]

In some embodiments, the get data with errors instruction 621 may optionally be a privileged-level instruction that is only executable at a level of privilege that is higher than a user-level privilege (e.g., executable by an OS, VMM, or other system software but not by user-level applications), although this is not required for other embodiments. This may optionally be the case to help prevent an unintended user-level application from using the get data with errors instruction to load data with or without errors that it is not intended to access.

The execution unit 631 and/or the apparatus 619 may include specific or particular logic (e.g., transistors, integrated circuitry, or other hardware potentially combined with firmware (e.g., instructions stored in non-volatile memory) and/or software) that is operative to perform the operations corresponding to the get data with errors instruction 621 (e.g., in response to one or more lower-level control signals, operations, or decoded instructions that have been decoded from the get data with errors instruction). By way of example, the execution unit may include a load unit or circuitry, a load/store unit or circuitry, a memory access unit or circuitry, or the like. In some embodiments, the execution unit may include one or more input structures (e.g., a port, interconnect, or interface) coupled to receive address information, address generation circuitry or logic, memory access circuitry or logic, and one or more output structures (e.g., a port, interconnect, or interface) coupled therewith to store the data having the one or more errors.

**FIG. 7** is a block diagram of an embodiment of an apparatus 719 (e.g., at least one chip) that is operative to perform an embodiment of a get ECC instruction 722. In some embodiments, the get ECC instruction may be used by software (e.g., system software) to load or obtain metadata dependent ECC. By way of example, this may be done to collect and preserve the metadata dependent ECC so that it can be used to correct data having one or more errors at a later point in time (e.g., when the metadata used to generate the metadata dependent ECC is known).

The apparatus 719 may include a processor that is the same as, similar to, or different than, the processor 101 of **FIG. 1A****.** The apparatus includes a decode unit 730 that is operative to decode the get ECC instruction 722, an execution unit 731 that is operative to perform operations corresponding to the get ECC instruction 722. Aside from aspects described below pertaining to the get ECC instruction, unless otherwise specified, the processor, decode unit 730, and execution unit 731may optionally be the same as or similar to (e.g., have any one or more characteristics that are the same as or similar to) the correspondingly named components of **FIG. 4****.** To avoid obscuring the description, the different and/or additional characteristics of the embodiment of **FIG. 7** will primarily be described, without repeating all the characteristics which may optionally be the same or similar to those described for the embodiment of **FIG. 4****.**

The apparatus 719 may receive the get ECC instruction 722. The get ECC instruction may represent a macroinstruction, machine code instruction, or other instruction of an instruction set of a processor. The get ECC instruction may have various formats or encodings, such as, for example, those described further below. The get ECC instruction may have one or more fields for an opcode that at least partially or fully specifies the operation to be performed (e.g., to load or obtain a metadata dependent ECC).

In some embodiments, the get ECC instruction may explicitly specify (e.g., through one or more fields or a set of bits) and/or otherwise indicate (e.g., implicitly indicate) address information 733 corresponding to data 716 having the one or more errors and/or useful to generate an address of a memory location storing the data 716 having the one or more errors in system memory 713. Such address information may be indicated by the get ECC instruction in any of the many ways already described for the get metadata instruction. As shown, one or more registers 732 of the processor may optionally store the address information. In some embodiments, the get ECC instruction may also explicitly specify (e.g., through one or more fields or a set of bits) and/or otherwise indicate (e.g., implicitly indicate) a destination storage location 734 where the metadata dependent ECC is to be stored. In some embodiments, the destination storage location may be in a cache of the processor (e.g., the destination storage location may be a location in the cache corresponding to the memory location used to store the data). In other embodiments, the destination storage location may be a register of the processor (e.g., a general-purpose register, a scalar register, a vector register, etc.).

The apparatus includes the decode unit 730 coupled to receive the get ECC instruction 722. The decode unit may be operative to decode the get ECC instruction into one or more lower-level control signals, operations, or decoded instructions. In some embodiments, the decode unit may include at least one input structure (e.g., a port, interconnect, or interface) coupled to receive the get ECC instruction, an instruction recognition and decode logic or circuitry coupled therewith to recognize and decode the get ECC instruction into the one or more lower-level control signals, operations, or decoded instructions, and at least one output structure (e.g., a port, interconnect, or interface) coupled therewith to output the one or more lower-level control signals, operations, or decoded instructions. The decode unit and/or its instruction recognition and decode logic or circuitry may be implemented using any of various types of instruction decode mechanisms including, but not limited to, microcode read only memories (ROMs), look-up tables, hardware implementations, programmable logic arrays (PLAs), other mechanisms suitable to implement instruction decode unit, and combinations thereof. In some embodiments, the decode unit may include at least some circuitry and/or hardware (e.g., transistors, integrated circuitry, on-die read-only memory or other non-volatile memory storing microcode or other hardware-level instructions, or a combination thereof). In some embodiments, the decode unit may be included on a die, integrated circuit, or semiconductor substrate.

The apparatus also includes the execution unit 731. The execution unit is coupled with the decode unit x730x (e.g., to receive the one or more lower-level control signals, operations, or decoded instructions). The execution unit is also coupled to receive the indicated address information 733 corresponding to the data 716 having the one or more errors and/or useful to generate an address of a memory location storing the data 716 having the one or more errors in system memory. For example, the execution unit may be coupled with one or more registers 732 storing such address information. In some embodiments, the execution unit may be on a die or integrated circuit along with the decode unit. The execution unit may be operative to perform operations corresponding to the get ECC instruction. For example, the execution unit may execute one or more lower-level control signals, operations, or decoded instructions which may cause or control the execution unit to perform the operations corresponding to the get ECC instruction. In some embodiments, the operations may correspond to and/or be specified by the opcode of the get ECC instruction. In some embodiments, the execution unit may include at least one memory controller 711 controlled by the get ECC instruction to load ECC (e.g., the metadata dependent ECC 715). In some embodiments, the execution unit (e.g., the memory controller) may optionally be coupled with the system memory via separate interconnects or paths with one being used to transfer data (e.g., from one set of DIMMs) and another being used to transfer ECC (e.g., from a set of ECC DIMMs_ so that data and ECC can be accessed in parallel.

In some embodiments, the operations may include loading 749 an ECC (e.g., the metadata dependent ECC 715) corresponding to the data 716 from the system memory 713. In some embodiments, only half or only another portion of the ECC may optionally be loaded, although this is not required. In some embodiments, the operations may also include storing a copy of the ECC (e.g., the metadata dependent ECC 715B) in a destination storage location 734. In some embodiments, the destination storage location may be a cache of the processor (e.g., a location in a cache corresponding to the location of the data having one or more errors). In other embodiments, the destination storage location may be a register of the processor (e.g., a general-purpose register, a scalar register, a vector register, etc.).

In some embodiments, the execution unit may instruct the memory controller to load the ECC (e.g., the metadata dependent ECC 715) even when it does not know the metadata (e.g., the metadata used to generate the metadata dependent ECC 715). As previously described, some uses of metadata may include a lock-and-key type of security protection mechanism in which the access to the data 716 may be controlled or conditioned on a memory tag, color, or metadata provided with the pointer matching or otherwise being compatible with metadata corresponding to the data 716 (e.g., a metadata dependent ECC 715). Other uses are similarly based on other types of access restrictions based on compatibility of metadata provided in the pointer with metadata corresponding to the data. However, an intended possible use case of the get ECC instruction 722 is for software to get the ECC even when it does not know the value of such metadata. Accordingly, in some embodiments, the get ECC instruction may have special privileges to allow or control the execution unit to load the ECC even when the software using the get ECC instruction does not know the metadata. In some embodiments, the ECC may be loaded with a pointer or physical address that does not have an associated memory tag, color, or other metadata value and/or the access to the data 716 having the errors may not provide a metadata value to be compared with metadata corresponding to the data (e.g., the metadata dependent ECC 715). In such embodiments, the comparison for a match or compatibility may also optionally be skipped. Alternatively, the comparison for compatibility may optionally be performed, but a result of the comparison may not condition or prevent the ability to load the ECC. In other embodiments, the data may be loaded with a pointer or physical address that does have an associated memory tag, color, or other metadata value but it may be an incorrect, arbitrary, or default metadata value and the load of the ECC may still be allowed irrespective of the metadata value provided. In some such embodiments, the comparison for a match or compatibility may optionally be skipped. Alternatively, the comparison may optionally be performed, but a result of the comparison may not condition or prevent the ability to load the ECC.

In some embodiments, the operations may also optionally include loading 748 the data 716 having the one or more errors from the system memory 713, although this is optional not required. In some embodiments, only half or only another portion of the data may optionally be loaded if only half or only another portion of the ECC was loaded, although this is not required. In some embodiments, as shown by a callout 750, this may include bypassing application of a corresponding ECC (e.g., the metadata dependent ECC 715) to the data having the one or more errors (e.g., bypassing attempting to correct the one or more errors in the data using the ECC), as described above. In some embodiments, the execution unit may load the data having one or more errors even when it does not know the metadata (e.g., the metadata used to generate the metadata dependent ECC) as previously described immediately above. In some embodiments, the operations may also optionally include to store a copy of the loaded data 716B having the one or more errors in either the destination storage location or a second destination storage location. The same type of destination storage locations is suitable (e.g., in a cache, in a register, etc.).

In some embodiments, the data 716 having one or more errors and the ECC (e.g., the metadata dependent ECC 715) may be loaded and stored together as a plurality of operations that are performed atomically. Such atomicity may help to ensure that the data having the errors that is loaded and the ECC that is loaded are mutually consistent with one another and that no intervening operations occur between the loads of the data and the ECC that could change one of them. Alternatively, fences or other approaches may be used to make such assurances.

In some embodiments, the operations may also optionally include to indicate that the ECC (e.g., the metadata dependent ECC 715B) needs to be corrected. For example, this may include changing or configuring one or more bits corresponding to the destination storage location used to store the data having the one or more errors to indicate that the ECC (e.g., the metadata dependent ECC 715B) has the one or more errors, is poisoned data, needs to be corrected before being used, or the like. This may effectively represent a tag or flag corresponding to the ECC (e.g., the metadata dependent ECC 715B) that system software may use subsequently to know or remember that it needs to be corrected prior to use.

In some embodiments, the get ECC instruction may optionally be a privileged-level instruction that is only executable at a level of privilege that is higher than a user-level privilege (e.g., executable by an OS, VMM, or other system software but not by user-level applications), although this is not required for other embodiments. This may optionally be the case to help prevent an unintended user-level application from using the get ECC instruction to get ECC for data it is not intended to access.

The execution unit 731 and/or the apparatus 719 may include specific or particular logic (e.g., transistors, integrated circuitry, or other hardware potentially combined with firmware (e.g., instructions stored in non-volatile memory) and/or software) that is operative to perform the operations corresponding to the get ECC instruction 722 (e.g., in response to one or more lower-level control signals, operations, or decoded instructions that have been decoded from the get ECC instruction ). By way of example, the execution unit may include a load unit or circuitry, a load/store unit or circuitry, a memory access unit or circuitry, or the like. In some embodiments, the execution unit may include one or more input structures (e.g., a port, interconnect, or interface) coupled to receive address information, address generation circuitry or logic, memory access circuitry or logic, and one or more output structures (e.g., a port, interconnect, or interface) coupled therewith to store the metadata dependent ECC.

Other embodiments may include a store ECC instruction. The store ECC instruction may specific or otherwise indicate a source storage location (e.g., a register) having source ECC (e.g., source metadata dependent ECC) and may indicate address information similar to that described above that may be used to address data in system memory. The store ECC instruction when performed may cause an execution unit to store the source ECC (e.g., the source metadata dependent ECC) from the source storage location to ECC (e.g., metadata dependent ECC) in system memory for the data addressed by the address information. For example, the source metadata dependent ECC may be stored from a source register to the system memory overwriting the metadata dependent ECC 715.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

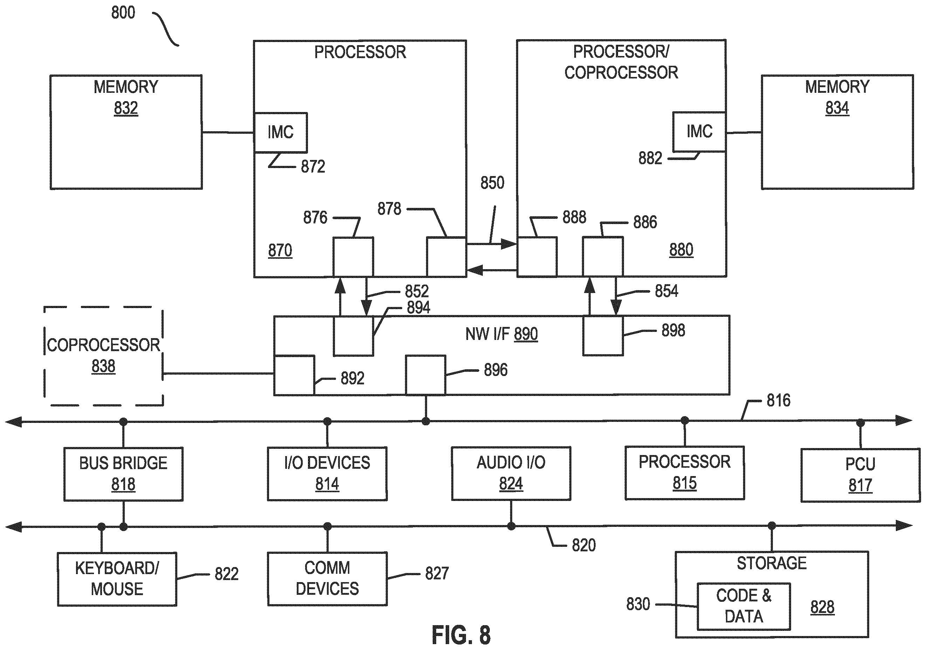

**FIG. 8** illustrates an example computing system. Multiprocessor system 800 is an interfaced system and includes a plurality of processors or cores including a first processor 870 and a second processor 880 coupled via an interface 850 such as a point-to-point (P-P) interconnect, a fabric, and/or bus. In some examples, the first processor 870 and the second processor 880 are homogeneous. In some examples, the first processor 870 and the second processor 880 are heterogenous. Though the example system 800 is shown to have two processors, the system may have three or more processors, or may be a single processor system. In some examples, the computing system is a system on a chip (SoC).

Processors 870 and 880 are shown including integrated memory controller (IMC) circuitry 872 and 882, respectively. Processor 870 also includes interface circuits 876 and 878; similarly, second processor 880 includes interface circuits 886 and 888. Processors 870, 880 may exchange information via the interface 850 using interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a network interface (NW I/F) 890 via individual interfaces 852, 854 using interface circuits 876, 894, 886, 898. The network interface 890 (e.g., one or more of an interconnect, bus, and/or fabric, and in some examples is a chipset) may optionally exchange information with a coprocessor 838 via an interface circuit 892. In some examples, the coprocessor 838 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 870, 880 or outside of both processors, yet connected with the processors via an interface such as P-P interconnect, such that either or both processors' local cache information may be stored in the shared cache if a processor is placed into a low power mode.

Network interface 890 may be coupled to a first interface 816 via interface circuit 896. In some examples, first interface 816 may be an interface such as a Peripheral Component Interconnect (PCI) interconnect, a PCI Express interconnect or another I/O interconnect. In some examples, the first interface 816 is coupled to a power control unit (PCU) 817, which may include circuitry, software, and/or firmware to perform power management operations regarding the processors 870, 880 and/or co-processor 838. PCU 817 provides control information to a voltage regulator (not shown) to cause the voltage regulator to generate the appropriate regulated voltage. PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software.

Various I/O devices 814 may be coupled to first interface 816, along with a bus bridge 818 which couples first interface 816 to a second interface 820. In some examples, one or more additional processor(s) 815, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 816. In some examples, the second interface 820 may be a low pin count (LPC) interface. Various devices may be coupled to second interface 820 including, for example, a keyboard and/or mouse 822, communication devices 827 and storage circuitry 828. Storage circuitry 828 may be one or more non-transitory machine-readable storage media as described below, such as a disk drive or other mass storage device which may include instructions/code and data 830 and may implement the storage 'ISAB03 in some examples. Further, an audio I/O 824 may be coupled to second interface 820. Note that other architectures than the point-to-point architecture described above are possible. For example, instead of the point-to-point architecture, a system such as multiprocessor system 800 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

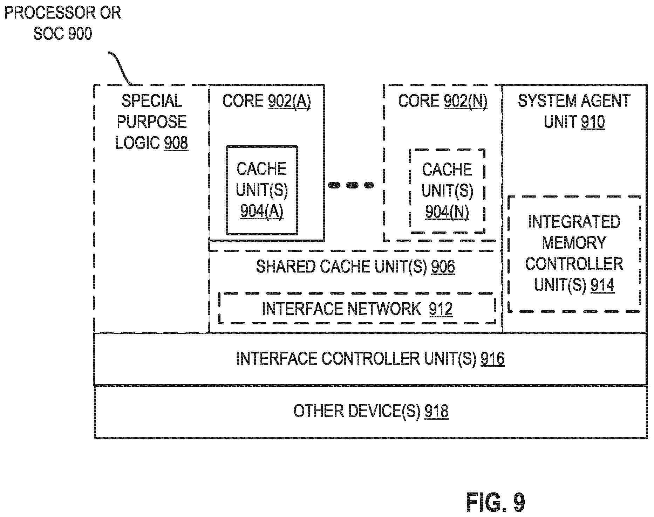

**FIG. 9** illustrates a block diagram of an example processor and/or SoC 900 that may have one or more cores and an integrated memory controller. The solid lined boxes illustrate a processor 900 with a single core 902(A), system agent unit circuitry 910, and a set of one or more interface controller unit(s) circuitry 916, while the optional addition of the dashed lined boxes illustrates an alternative processor 900 with multiple cores 902(A)-(N), a set of one or more integrated memory controller unit(s) circuitry 914 in the system agent unit circuitry 910, and special purpose logic 908, as well as a set of one or more interface controller units circuitry 916. Note that the processor 900 may be one of the processors 870 or 880, or co-processor 838 or 815 of FIG. 8.

Thus, different implementations of the processor 900 may include: 1) a CPU with the special purpose logic 908 being integrated graphics and/or scientific (throughput) logic (which may include one or more cores, not shown), and the cores 902(A)-(N) being one or more general purpose cores (e.g., general purpose in-order cores, general purpose out-of-order cores, or a combination of the two); 2) a coprocessor with the cores 902(A)-(N) being a large number of special purpose cores intended primarily for graphics and/or scientific (throughput); and 3) a coprocessor with the cores 902(A)-(N) being a large number of general purpose in-order cores. Thus, the processor 900 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 904(A)-(N) within the cores 902(A)-(N), a set of one or more shared cache unit(s) circuitry 906, and external memory (not shown) coupled to the set of integrated memory controller unit(s) circuitry 914. The set of one or more shared cache unit(s) circuitry 906 may include one or more mid-level caches, such as level 2 (L2), level 3 (L3), level 4 (L4), or other levels of cache, such as a last level cache (LLC), and/or combinations thereof. While in some examples interface network circuitry 912 (e.g., a ring interconnect) interfaces the special purpose logic 908 (e.g., integrated graphics logic), the set of shared cache unit(s) circuitry 906, and the system agent unit circuitry 910, alternative examples use any number of well-known techniques for interfacing such units. In some examples, coherency is maintained between one or more of the shared cache unit(s) circuitry 906 and cores 902(A)-(N). In some examples, interface controller units circuitry 916 couple the cores 902 to one or more other devices 918 such as one or more I/O devices, storage, one or more communication devices (e.g., wireless networking, wired networking, etc.), etc.

In some examples, one or more of the cores 902(A)-(N) are capable of multi-threading. The system agent unit circuitry 910 includes those components coordinating and operating cores 902(A)-(N). The system agent unit circuitry 910 may include, for example, power control unit (PCU) circuitry and/or display unit circuitry (not shown). The PCU may be or may include logic and components needed for regulating the power state of the cores 902(A)-(N) and/or the special purpose logic 908 (e.g., integrated graphics logic). The display unit circuitry is for driving one or more externally connected displays.

The cores 902(A)-(N) may be homogenous in terms of instruction set architecture (ISA). Alternatively, the cores 902(A)-(N) may be heterogeneous in terms of ISA; that is, a subset of the cores 902(A)-(N) may be capable of executing an ISA, while other cores may be capable of executing only a subset of that ISA or another ISA.

Example Core Architectures - In-order and out-of-order core block diagram.

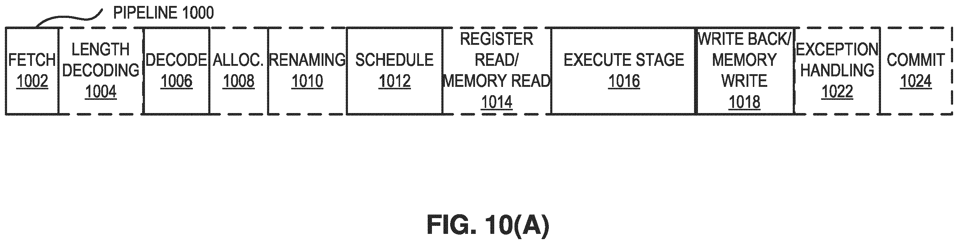

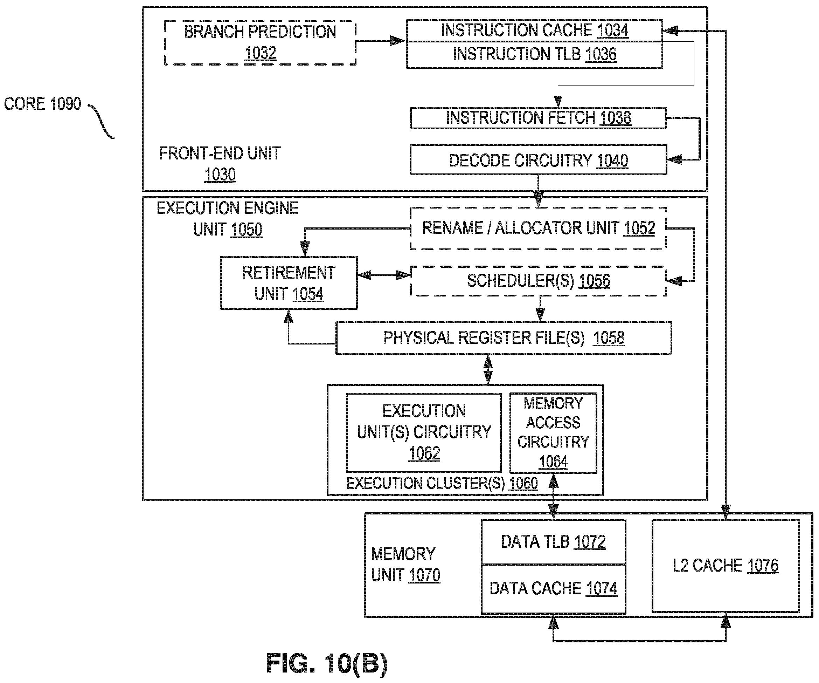

**FIG. 10(A)** is a block diagram illustrating both an example in-order pipeline and an example register renaming, out-of-order issue/execution pipeline according to examples. **FIG. 10(B)** is a block diagram illustrating both an example in-order architecture core and an example register renaming, out-of-order issue/execution architecture core to be included in a processor according to examples. The solid lined boxes in FIGS. 10(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 10(A)****,** a processor pipeline 1000 includes a fetch stage 1002, an optional length decoding stage 1004, a decode stage 1006, an optional allocation (Alloc) stage 1008, an optional renaming stage 1010, a schedule (also known as a dispatch or issue) stage 1012, an optional register read/memory read stage 1014, an execute stage 1016, a write back/memory write stage 1018, an optional exception handling stage 1022, and an optional commit stage 1024. One or more operations can be performed in each of these processor pipeline stages. For example, during the fetch stage 1002, one or more instructions are fetched from instruction memory, and during the decode stage 1006, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1006 and the register read/memory read stage 1014 may be combined into one pipeline stage. In one example, during the execute stage 1016, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of **FIG. 10(B)** may implement the pipeline 1000 as follows: 1) the instruction fetch circuitry 1038 performs the fetch and length decoding stages 1002 and 1004; 2) the decode circuitry 1040 performs the decode stage 1006; 3) the rename/allocator unit circuitry 1052 performs the allocation stage 1008 and renaming stage 1010; 4) the scheduler(s) circuitry 1056 performs the schedule stage 1012; 5) the physical register file(s) circuitry 1058 and the memory unit circuitry 1070 perform the register read/memory read stage 1014; the execution cluster(s) 1060 perform the execute stage 1016; 6) the memory unit circuitry 1070 and the physical register file(s) circuitry 1058 perform the write back/memory write stage 1018; 7) various circuitry may be involved in the exception handling stage 1022; and 8) the retirement unit circuitry 1054 and the physical register file(s) circuitry 1058 perform the commit stage 1024.

**FIG. 10(B)** shows a processor core 1090 including front-end unit circuitry 1030 coupled to execution engine unit circuitry 1050, and both are coupled to memory unit circuitry 1070. The core 1090 may be a reduced instruction set architecture computing (RISC) core, a complex instruction set architecture computing (CISC) core, a very long instruction word (VLIW) core, or a hybrid or alternative core type. As yet another option, the core 1090 may be a special-purpose core, such as, for example, a network or communication core, compression engine, coprocessor core, general purpose computing graphics processing unit (GPGPU) core, graphics core, or the like.

The front-end unit circuitry 1030 may include branch prediction circuitry 1032 coupled to instruction cache circuitry 1034, which is coupled to an instruction translation lookaside buffer (TLB) 1036, which is coupled to instruction fetch circuitry 1038, which is coupled to decode circuitry 1040. In one example, the instruction cache circuitry 1034 is included in the memory unit circuitry 1070 rather than the front-end circuitry 1030. The decode circuitry 1040 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1040 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1040 may be implemented using various different mechanisms. Examples of suitable mechanisms include, but are not limited to, look-up tables, hardware implementations, programmable logic arrays (PLAs), microcode read only memories (ROMs), etc. In one example, the core 1090 includes a microcode ROM (not shown) or other medium that stores microcode for certain macroinstructions (e.g., in decode circuitry 1040 or otherwise within the front-end circuitry 1030). In one example, the decode circuitry 1040 includes a micro-operation (micro-op) or operation cache (not shown) to hold/cache decoded operations, micro-tags, or micro-operations generated during the decode or other stages of the processor pipeline 1000. The decode circuitry 1040 may be coupled to rename/allocator unit circuitry 1052 in the execution engine circuitry 1050.

The execution engine circuitry 1050 includes the rename/allocator unit circuitry 1052 coupled to retirement unit circuitry 1054 and a set of one or more scheduler(s) circuitry 1056. The scheduler(s) circuitry 1056 represents any number of different schedulers, including reservations stations, central instruction window, etc. In some examples, the scheduler(s) circuitry 1056 can include arithmetic logic unit (ALU) scheduler/scheduling circuitry, ALU queues, address generation unit (AGU) scheduler/scheduling circuitry, AGU queues, etc. The scheduler(s) circuitry 1056 is coupled to the physical register file(s) circuitry 1058. Each of the physical register file(s) circuitry 1058 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1058 includes vector registers unit circuitry, writemask registers unit circuitry, and scalar register unit circuitry. These register units may provide architectural vector registers, vector mask registers, general-purpose registers, etc. The physical register file(s) circuitry 1058 is coupled to the retirement unit circuitry 1054 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1054 and the physical register file(s) circuitry 1058 are coupled to the execution cluster(s) 1060. The execution cluster(s) 1060 includes a set of one or more execution unit(s) circuitry 1062 and a set of one or more memory access circuitry 1064. The execution unit(s) circuitry 1062 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1056, physical register file(s) circuitry 1058, and execution cluster(s) 1060 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1064). It should also be understood that where separate pipelines are used, one or more of these pipelines may be out-of-order issue/execution and the rest in-order.

In some examples, the execution engine unit circuitry 1050 may perform load store unit (LSU) address/data pipelining to an Advanced Microcontroller Bus (AMB) interface (not shown), and address phase and writeback, data phase load, store, and branches.

The set of memory access circuitry 1064 is coupled to the memory unit circuitry 1070, which includes data TLB circuitry 1072 coupled to data cache circuitry 1074 coupled to level 2 (L2) cache circuitry 1076. In one example, the memory access circuitry 1064 may include load unit circuitry, store address unit circuitry, and store data unit circuitry, each of which is coupled to the data TLB circuitry 1072 in the memory unit circuitry 1070. The instruction cache circuitry 1034 is further coupled to the level 2 (L2) cache circuitry 1076 in the memory unit circuitry 1070. In one example, the instruction cache 1034 and the data cache 1074 are combined into a single instruction and data cache (not shown) in L2 cache circuitry 1076, level 3 (L3) cache circuitry (not shown), and/or main memory. The L2 cache circuitry 1076 is coupled to one or more other levels of cache and eventually to a main memory.

The core 1090 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1090 includes logic to support a packed data instruction set architecture extension (e.g., AVX1, AVX2), thereby allowing the operations used by many multimedia applications to be performed using packed data.

### Example Execution Unit(s) Circuitry.

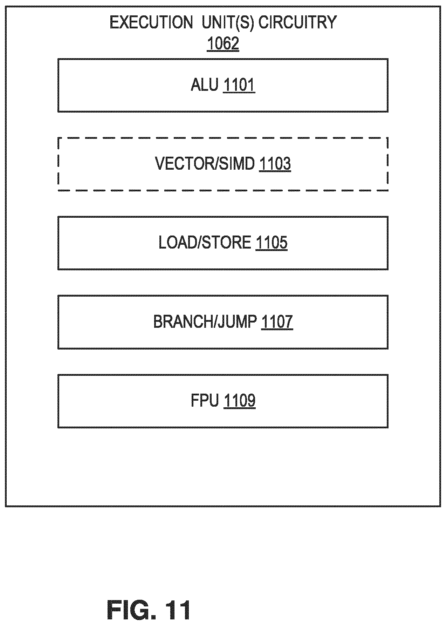

**FIG. 11** illustrates examples of execution unit(s) circuitry, such as execution unit(s) circuitry 1062 of **FIG. 10(B)****.** As illustrated, execution unit(s) circuity 1062 may include one or more ALU circuits 1101, optional vector/single instruction multiple data (SIMD) circuits 1103, load/store circuits 1105, branch/jump circuits 1107, and/or Floating-point unit (FPU) circuits 1109. ALU circuits 1101 perform integer arithmetic and/or Boolean operations. Vector/SIMD circuits 1103 perform vector/SIMD operations on packed data (such as SIMD/vector registers). Load/store circuits 1105 execute load and store instructions to load data from memory into registers or store from registers to memory. Load/store circuits 1105 may also generate addresses. Branch/jump circuits 1107 cause a branch or jump to a memory address depending on the instruction. FPU circuits 1109 perform floating-point arithmetic. The width of the execution unit(s) circuitry 1062 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

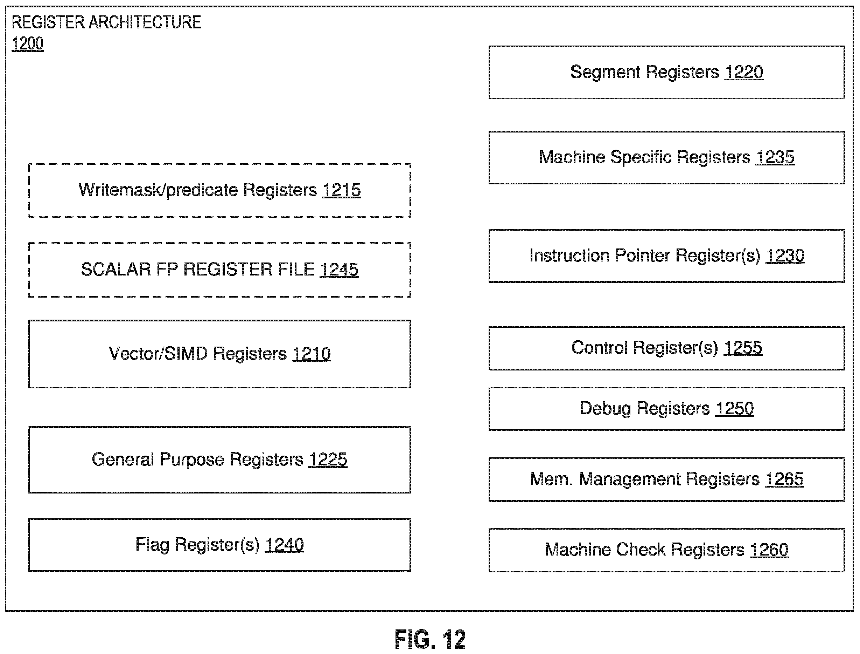

**FIG. 12** is a block diagram of a register architecture 1200 according to some examples. As illustrated, the register architecture 1200 includes vector/SIMD registers 1210 that vary from 128-bit to 1,024 bits width. In some examples, the vector/SIMD registers 1210 are physically 512-bits and, depending upon the mapping, only some of the lower bits are used. For example, in some examples, the vector/SIMD registers 1210 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1200 includes writemask/predicate registers 1215. For example, in some examples, there are 8 writemask/predicate registers (sometimes called k0 through k7) that are each 16-bit, 32-bit, 64-bit, or 128-bit in size. Writemask/predicate registers 1215 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1215 corresponds to a data element position of the destination. In other examples, the writemask/predicate registers 1215 are scalable and consists of a set number of enable bits for a given vector element (e.g., 8 enable bits per 64-bit vector element).

The register architecture 1200 includes a plurality of general-purpose registers 1225. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1200 includes scalar floating-point (FP) register file 1245 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1240 (e.g., EFLAGS, RFLAGS, etc.) store status and control information for arithmetic, compare, and system operations. For example, the one or more flag registers 1240 may store condition code information such as carry, parity, auxiliary carry, zero, sign, and overflow. In some examples, the one or more flag registers 1240 are called program status and control registers.

Segment registers 1220 contain segment points for use in accessing memory. In some examples, these registers are referenced by the names CS, DS, SS, ES, FS, and GS.

Machine specific registers (MSRs) 1235 control and report on processor performance. Most MSRs 1235 handle system-related functions and are not accessible to an application program. Machine check registers 1260 consist of control, status, and error reporting MSRs that are used to detect and report on hardware errors.

One or more instruction pointer register(s) 1230 store an instruction pointer value. Control register(s) 1255 (e.g., CR0-CR4) determine the operating mode of a processor (e.g., processor 870, 880, 838, 815, and/or 900) and the characteristics of a currently executing task. Debug registers 1250 control and allow for the monitoring of a processor or core's debugging operations.

Memory (mem) management registers 1265 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1200 may, for example, be used in register file / memory 'ISAB08, or physical register file(s) circuitry 10 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

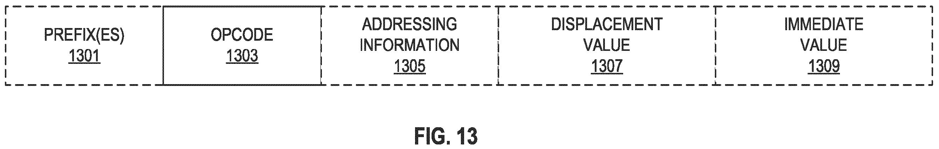

FIG. 13 illustrates examples of an instruction format. As illustrated, an instruction may include multiple components including, but not limited to, one or more fields for: one or more prefixes 1301, an opcode 1303, addressing information 1305 (e.g., register identifiers, memory addressing information, etc.), a displacement value 1307, and/or an immediate value 1309. Note that some instructions utilize some or all the fields of the format whereas others may only use the field for the opcode 1303. In some examples, the order illustrated is the order in which these fields are to be encoded, however, it should be appreciated that in other examples these fields may be encoded in a different order, combined, etc.

The prefix(es) field(s) 1301, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1303 is used to at least partially define the operation to be performed upon a decoding of the instruction. In some examples, a primary opcode encoded in the opcode field 1303 is one, two, or three bytes in length. In other examples, a primary opcode can be a different length. An additional 3-bit opcode field is sometimes encoded in another field.

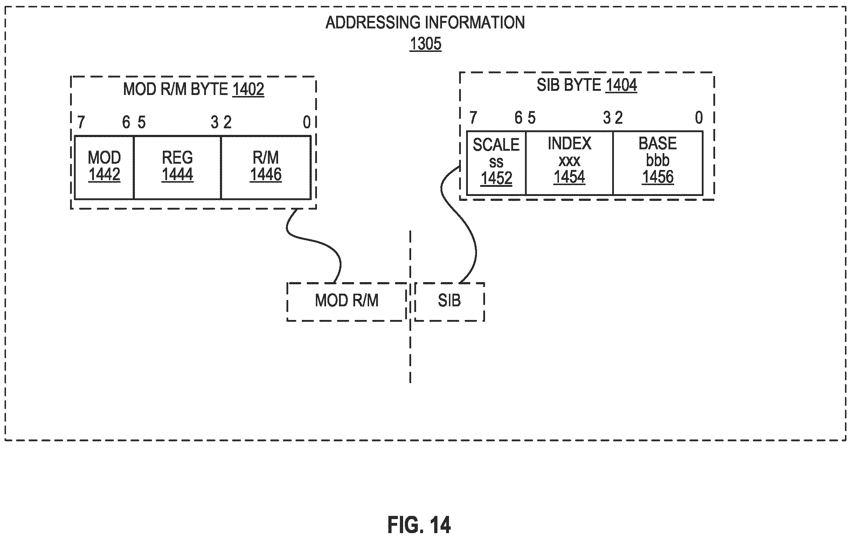

The addressing information field 1305 is used to address one or more operands of the instruction, such as a location in memory or one or more registers. **FIG. 14** illustrates examples of the addressing information field 1305. In this illustration, an optional MOD R/M byte 1402 and an optional Scale, Index, Base (SIB) byte 1404 are shown. The MOD R/M byte 1402 and the SIB byte 1404 are used to encode up to two operands of an instruction, each of which is a direct register or effective memory address. Note that both fields are optional in that not all instructions include one or more of these fields. The MOD R/M byte 1402 includes a MOD field 1442, a register (reg) field 1444, and R/M field 1446.

The content of the MOD field 1442 distinguishes between memory access and non-memory access modes. In some examples, when the MOD field 1442 has a binary value of 11 (11b), a register-direct addressing mode is utilized, and otherwise a register-indirect addressing mode is used.

The register field 1444 may encode either the destination register operand or a source register operand or may encode an opcode extension and not be used to encode any instruction operand. The content of register field 1444, directly or through address generation, specifies the locations of a source or destination operand (either in a register or in memory). In some examples, the register field 1444 is supplemented with an additional bit from a prefix (e.g., prefix 1301) to allow for greater addressing.

The R/M field 1446 may be used to encode an instruction operand that references a memory address or may be used to encode either the destination register operand or a source register operand. Note the R/M field 1446 may be combined with the MOD field 1442 to dictate an addressing mode in some examples.

The SIB byte 1404 includes a scale field 1452, an index field 1454, and a base field 1456 to be used in the generation of an address. The scale field 1452 indicates a scaling factor. The index field 1454 specifies an index register to use. In some examples, the index field 1454 is supplemented with an additional bit from a prefix (e.g., prefix 1301) to allow for greater addressing. The base field 1456 specifies a base register to use. In some examples, the base field 1456 is supplemented with an additional bit from a prefix (e.g., prefix 1301) to allow for greater addressing. In practice, the content of the scale field 1452 allows for the scaling of the content of the index field 1454 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1307 provides this value. Additionally, in some examples, a displacement factor usage is encoded in the MOD field of the addressing information field 1305 that indicates a compressed displacement scheme for which a displacement value is calculated and stored in the displacement field 1307.

In some examples, the immediate value field 1309 specifies an immediate value for the instruction. An immediate value may be encoded as a 1-byte value, a 2-byte value, a 4-byte value, etc.

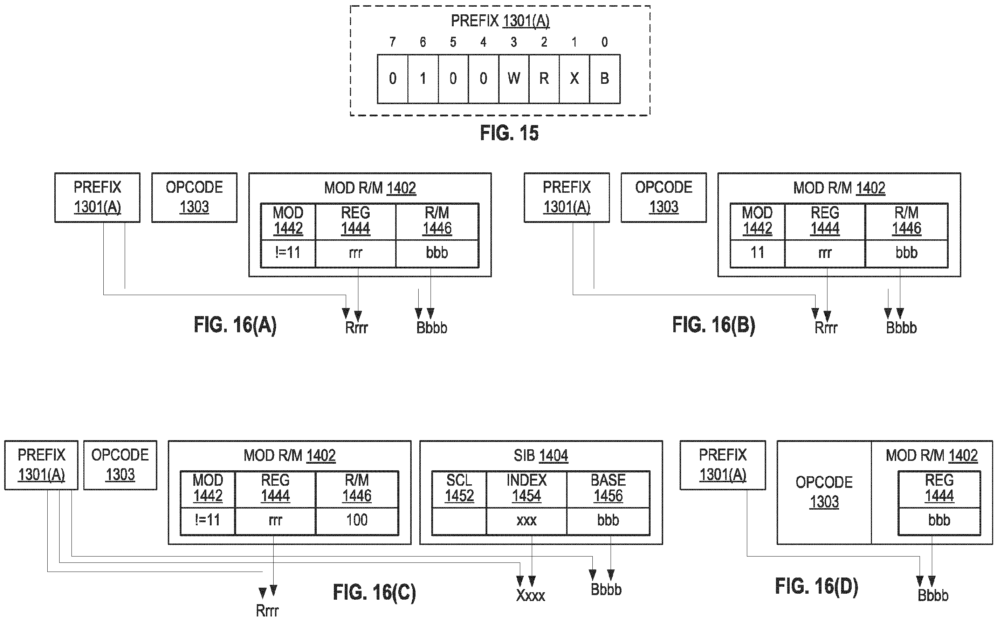

**FIG. 15** illustrates examples of a first prefix 1301(A). In some examples, the first prefix 1301(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1301(A) may specify up to three registers using 3-bit fields depending on the format: 1) using the reg field 1444 and the R/M field 1446 of the MOD R/M byte 1402; 2) using the MOD R/M byte 1402 with the SIB byte 1404 including using the reg field 1444 and the base field 1456 and index field 1454; or 3) using the register field of an opcode.

In the first prefix 1301(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1444 and MOD R/M R/M field 1446 alone can each only address 8 registers.

In the first prefix 1301(A), bit position 2 (R) may be an extension of the MOD R/M reg field 1444 and may be used to modify the MOD R/M reg field 1444 when that field encodes a general-purpose register, a 64-bit packed data register (e.g., a SSE register), or a control or debug register. R is ignored when MOD R/M byte 1402 specifies other registers or defines an extended opcode.

### Bit position 1 (X) may modify the SIB byte index field 1454.

Bit position 0 (B) may modify the base in the MOD R/M R/M field 1446 or the SIB byte base field 1456; or it may modify the opcode register field used for accessing general purpose registers (e.g., general purpose registers 1225).

FIGS. 16(A)-(D) illustrate examples of how the R, X, and B fields of the first prefix 1301(A) are used. **FIG. 16(A)** illustrates R and B from the first prefix 1301(A) being used to extend the reg field 1444 and R/M field 1446 of the MOD R/M byte 1402 when the SIB byte 14 04 is not used for memory addressing. **FIG. 16(B)** illustrates R and B from the first prefix 1301(A) being used to extend the reg field 1444 and R/M field 1446 of the MOD R/M byte 1402 when the SIB byte 14 04 is not used (register-register addressing). **FIG. 16(C)** illustrates R, X, and B from the first prefix 1301(A) being used to extend the reg field 1444 of the MOD R/M byte 1402 and the index field 1454 and base field 1456 when the SIB byte 14 04 being used for memory addressing. **FIG. 16(D)** illustrates B from the first prefix 1301(A) being used to extend the reg field 1444 of the MOD R/M byte 1402 when a register is encoded in the opcode 1303.

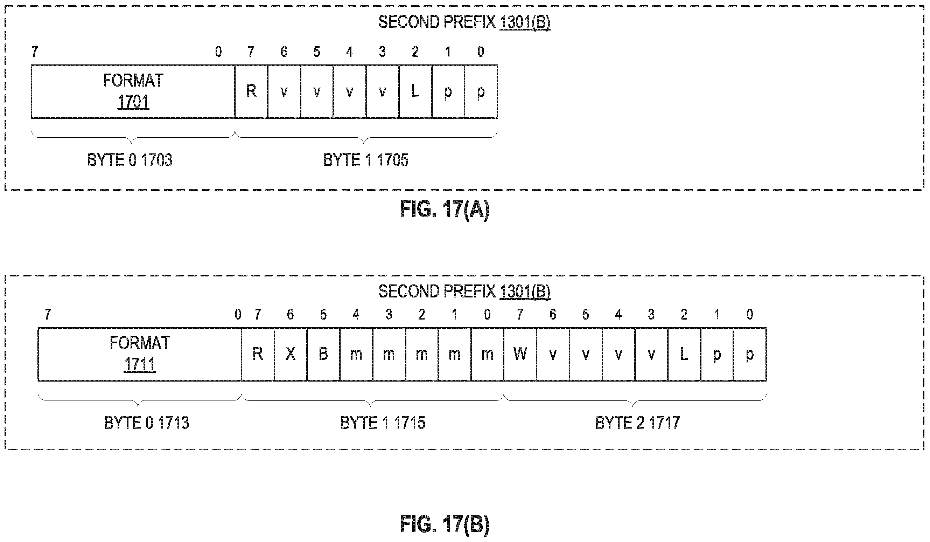

FIGS. 17(A)-(B) illustrate examples of a second prefix 1301(B). In some examples, the second prefix 1301(B) is an example of a VEX prefix. The second prefix 1301(B) encoding allows instructions to have more than two operands, and allows SIMD vector registers (e.g., vector/SIMD registers 1210) to be longer than 64-bits (e.g., 128-bit and 256-bit). The use of the second prefix 1301(B) provides for three-operand (or more) syntax. For example, previous two-operand instructions performed operations such as A = A + B, which overwrites a source operand. The use of the second prefix 1301(B) enables operands to perform nondestructive operations such as A = B + C.

In some examples, the second prefix 1301(B) comes in two forms - a two-byte form and a three-byte form. The two-byte second prefix 1301(B) is used mainly for 128-bit, scalar, and some 256-bit instructions; while the three-byte second prefix 1301(B) provides a compact replacement of the first prefix 1301(A) and 3-byte opcode instructions.

**FIG. 17(A)** illustrates examples of a two-byte form of the second prefix 1301(B). In one example, a format field 1701 (byte 0 1703) contains the value C5H. In one example, byte 1 1705 includes an "R" value in bit[7]. This value is the complement of the "R" value of the first prefix 1301(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1446 to encode the instruction operand that references a memory address or encode either the destination register operand or a source register operand.

Instructions that use this prefix may use the MOD R/M reg field 1444 to encode either the destination register operand or a source register operand, or to be treated as an opcode extension and not used to encode any instruction operand.

For instruction syntax that supports four operands, vvvv, the MOD R/M R/M field 1446 and the MOD R/M reg field 1444 encode three of the four operands. Bits[7:4] of the immediate value field 1309 are then used to encode the third source register operand.

**FIG. 17(B)** illustrates examples of a three-byte form of the second prefix 1301(B). In one example, a format field 1711 (byte 0 1713) contains the value C4H. Byte 1 1715 includes in bits[7:5] "R," "X," and "B" which are the complements of the same values of the first prefix 1301(A). Bits[4:0] of byte 1 1715 (shown as mmmmm) include content to encode, as needed, one or more implied leading opcode bytes. For example, 00001 implies a 0FH leading opcode, 00010 implies a 0F38H leading opcode, 00011 implies a 0F3AH leading opcode, etc.

Bit[7] of byte 2 1717 is used similar to W of the first prefix 1301(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1446 to encode the instruction operand that references a memory address or encode either the destination register operand or a source register operand.

Instructions that use this prefix may use the MOD R/M reg field 1444 to encode either the destination register operand or a source register operand, or to be treated as an opcode extension and not used to encode any instruction operand.

For instruction syntax that supports four operands, vvvv, the MOD R/M R/M field 1446, and the MOD R/M reg field 1444 encode three of the four operands. Bits[7:4] of the immediate value field 1309 are then used to encode the third source register operand.

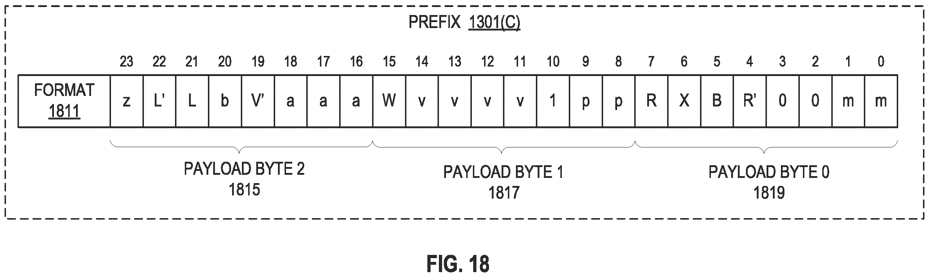

**FIG. 18** illustrates examples of a third prefix 1301(C). In some examples, the third prefix 1301(C) is an example of an EVEX prefix. The third prefix 1301(C) is a four-byte prefix.

The third prefix 1301(C) can encode 32 vector registers (e.g., 128-bit, 256-bit, and 512-bit registers) in 64-bit mode. In some examples, instructions that utilize a writemask/opmask (see discussion of registers in a previous figure, such as **FIG. 12**) or predication utilize this prefix. Opmask register allows for conditional processing or selection control. Opmask instructions, whose source/destination operands are opmask registers and treat the content of an opmask register as a single value, are encoded using the second prefix 1301(B).

The third prefix 1301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1301(C) is a format field 1811 that has a value, in one example, of 62H. Subsequent bytes are referred to as payload bytes 1815-1819 and collectively form a 24-bit value of P[23:0] providing specific capability in the form of one or more fields (detailed herein).

In some examples, P[1:0] of payload byte 1819 are identical to the low two mm bits. P[3:2] are reserved in some examples. Bit P[4] (R') allows access to the high 16 vector register set when combined with P[7] and the MOD R/M reg field 1444. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1444 and MOD R/M R/M field 1446. P[9:8] provides opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1301(A) and second prefix 1311(B) and may serve as an opcode extension bit or operand size promotion.

P[18:16] specify the index of a register in the opmask (writemask) registers (e.g., writemask/predicate registers 1215). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14: 11] to encode a second source vector register in a nondestructive source syntax which can access an upper 16 vector registers using P[19]. P[20] encodes multiple functionalities, which differ across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1301(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD RIM reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

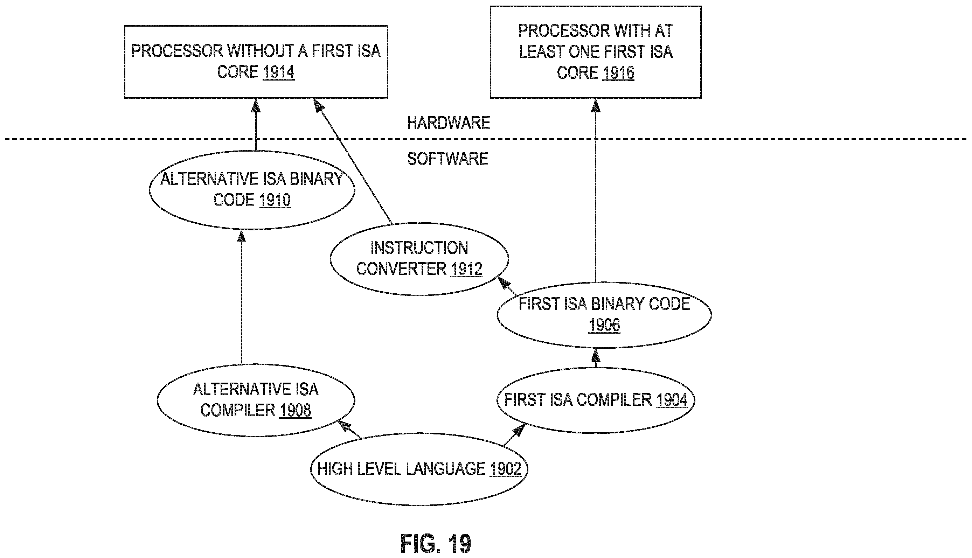

**FIG. 19** is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. **FIG. 19** shows a program in a high-level language 1902 may be compiled using a first ISA compiler 1904 to generate first ISA binary code 1906 that may be natively executed by a processor with at least one first ISA core 1916. The processor with at least one first ISA core 1916 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1904 represents a compiler that is operable to generate first ISA binary code 1906 (e.g., object code) that can, with or without additional linkage processing, be executed on the processor with at least one first ISA core 1916. Similarly, **FIG. 19** shows the program in the high-level language 1902 may be compiled using an alternative ISA compiler 1908 to generate alternative ISA binary code 1910 that may be natively executed by a processor without a first ISA core 1914. The instruction converter 1912 is used to convert the first ISA binary code 1906 into code that may be natively executed by the processor without a first ISA core 1914. This converted code is not necessarily to be the same as the alternative ISA binary code 1910; however, the converted code will accomplish the general operation and be made up of instructions from the alternative ISA. Thus, the instruction converter 1912 represents software, firmware, hardware, or a combination thereof that, through emulation, simulation, or any other process, allows a processor or other electronic device that does not have a first ISA processor or core to execute the first ISA binary code 1906.

Components, features, and details described for any of the processors or apparatus disclosed herein may optionally apply to any of the methods disclosed herein, which in embodiments may optionally be performed by and/or with such processors or apparatus. Any of the processors described herein in embodiments may optionally be included in any of the systems disclosed herein. Any of the processors disclosed herein may optionally have any of the microarchitectures shown herein. Any of the instructions disclosed herein may optionally be performed by any of the processors disclosed herein. In addition, any of the instructions disclosed herein may in some embodiments optionally have any of the features or details of the instruction formats shown herein.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether explicitly described.

Processor components disclosed herein may be said and/or claimed to be operative, operable, capable, able, configured adapted, or otherwise to perform an operation. For example, a decoder may be said and/or claimed to decode an instruction, an execution unit may be said and/or claimed to store a result, or the like. As used herein, these expressions refer to the characteristics, properties, or attributes of the components when in a powered-off state, and do not imply that the components or the device or apparatus in which they are included is currently powered on or operating. For clarity, it is to be understood that the processors and apparatus claimed herein are not claimed as being powered on or running.

In the description and claims, the terms "coupled" and/or "connected," along with their derivatives, may have been used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, yet still co-operate or interact with each other. For example, an execution unit may be coupled with a register and/or a decode unit through one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical, or other form of propagated signals - such as carrier waves, infrared signals, and digital signals, may optionally be used.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

In the description above, specific details have been set forth to provide a thorough understanding of the embodiments. However, other embodiments may be practiced without some of these specific details. Various modifications and changes may be made thereunto without departing from the broader spirit and scope of the disclosure as set forth in the claims. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail to avoid obscuring the understanding of the description.

### EXAMPLE EMBODIMENTS

The following examples pertain to further embodiments. Specifics in the examples may be used anywhere in one or more embodiments.

Example 1 is at least one chip or another apparatus including a decode unit to decode an instruction. The instruction is to indicate address information corresponding to a location of data in system memory. The data is to have one or more errors. The apparatus also includes an execution unit coupled with the decode unit. The execution unit to perform operations corresponding to the instruction. The operations include to determine whether there is only a single metadata value, out of all possible metadata values of a given bit length, that allows a metadata dependent error correction code (ECC) to correct the one or more errors in the data. The metadata dependent ECC is to correspond to the data and is to be stored in the system memory. The operations also include to either store the single metadata value in a destination storage location if the determination is that there is only the single metadata value, or to indicate the determination is that there is not only the single metadata value.

Example 2 includes the apparatus of Example 1, where the execution unit, to said determine whether there is only the single metadata value, is to either determine there is only the single metadata value if the metadata dependent ECC corrects the one or more errors in the data for only one of said all possible metadata values, or else determine there is not only the single metadata value if the metadata dependent ECC does not correct the one or more errors in the data for any of said all possible metadata values or corrects the one or more errors in the data for at least two of said all possible metadata values.

Example 3 includes the apparatus of any one of Examples 1 to 2, where the execution unit is to compute whether each of said all possible metadata values allows the metadata dependent ECC to correct the one or more errors in the data.

Example 4 includes the apparatus of any one of Examples 1 to 2, where the execution unit, to said determine whether there is only the single metadata value, is to perform a different attempted access to the data with each of said all possible metadata values. Optionally, where the execution unit is to either determine there is only the single metadata value if an indication that the data has an error is not returned for only one of the attempted accesses, or else determine there is not only the single metadata value if an indication that the data has an error is not returned for zero or at least two of the attempted accesses.

Example 5 includes the apparatus of any one of Examples 1 to 4, where the instruction is a privileged-level instruction.

Example 6 includes the apparatus of any one of Examples 1 to 5, further including a cache, and where the destination storage location is in the cache.

Example 7 includes the apparatus of any one of Examples 1 to 5, where the destination storage location is a register of the processor.

Example 8 includes the apparatus of Example 7, where the instruction is to indicate the register.

Example 9 includes the apparatus of any one of Examples 1 to 8, where the instruction is a privileged-level instruction, and optionally where the destination storage location is at least one of a cache of the processor and a register of the processor.

Example 10 is a method including determining that there is only a single metadata value, out of all possible metadata values of a given bit length, which allows a metadata dependent error correction code (ECC) to correct one or more errors in data in system memory. The metadata dependent ECC corresponds to the data and is stored in the system memory. The method also includes performing a load operation for the data with the single metadata value.

Example 11 includes the method of Example 10, where determining that there is only the single metadata value includes determining that the metadata dependent ECC corrects the one or more errors in the data for only the single metadata value out of said all possible metadata values.

Example 12 includes the method of any one of Examples 10 to 11, where determining that there is only the single metadata value includes computing whether each of said all possible metadata values causes the metadata dependent ECC to correct the one or more errors in the data.

Example 13 includes the method of any one of Examples 10 to 12, where determining that there is only the single metadata value is performed in response to decoding and executing a single instruction. Optionally, the single instruction may indicate address information corresponding to a location of the data in the system memory.

Example 14 includes the method of any one of Examples 10 to 13, further including receiving the data corrected of the one or more errors by the metadata dependent ECC based on the single metadata value.

Example 15 includes the method of any one of Examples 10 to 14, where the data having the one or more errors is in a page in the system memory. The method may optionally also include paging out the page from the system memory to a secondary storage. This may optionally include storing the data corrected of the one or more errors and the single metadata value in a page in the secondary storage.

Example 16 is a non-transitory machine-readable storage medium storing instructions that if executed by a machine are to cause the machine to perform operations. The operations include to determine that there is only a single metadata value, out of all possible metadata values of a given bit length, that allows a metadata dependent error correction code (ECC) to correct one or more errors in data in system memory. The metadata dependent ECC corresponds to the data and is to be stored in the system memory. The operations also include to perform a load operation for the data with the single metadata value.

Example 17 includes the non-transitory machine-readable storage medium of Example 16, where the instructions to determine that there is only the single metadata value include instructions that if executed by the machine are to cause the machine to determine that the metadata dependent ECC corrects the one or more errors in the data for only the single metadata value out of said all possible metadata values.

Example 18 includes the non-transitory machine-readable storage medium of any one of Examples 16 to 17, where the instructions to determine that there is only the single metadata value include instructions that if executed by the machine are to cause the machine to compute whether each of said all possible metadata values causes the metadata dependent ECC to correct the one or more errors in the data.

Example 19 includes the non-transitory machine-readable storage medium of any one of Examples 16 to 18, where the instructions include a single instruction that if executed by the machine is to cause the machine to determine that there is only the single metadata value. Optionally, the single instruction may indicate address information corresponding to a location of the data in the system memory.

Example 20 includes the non-transitory machine-readable storage medium of any one of Examples 16 to 19, where the instructions further include instructions that if executed by the machine are to cause the machine to receive the data corrected of the one or more errors by the metadata dependent ECC based on the single metadata value..

Example 21 is a method including receiving a copy of data having one or more errors from system memory, receiving a copy of metadata dependent error correction code (ECC) corresponding to the data from the system memory, and preserve the copy of the data having the one or more errors and the copy of the metadata dependent ECC.

Example 22 includes the method of Example 21, further including detecting an attempted access to the data in the system memory with a metadata value, generating corrected data by using the metadata value from the attempted access and the preserved copy of the metadata dependent ECC to correct the one or more errors in the preserved copy of the data having the one or more errors, and storing the corrected data over the data having the one or more errors in the system memory.

Example 23 is a processor including a decode unit to decode an instruction. The instruction is to indicate address information corresponding to a location of data in system memory. The data is to have one or more errors. The processor also includes an execution unit coupled with the decode unit. The execution unit is to perform operations corresponding to the instruction. The operations include to load the data having the one or more errors from the system memory, including bypassing application of a corresponding error correction code (ECC) to the data having the one or more errors. The operations also include to store the data having the one or more errors in a destination storage location.

Example 24 includes the processor of Example 23, where the error correction code includes a metadata dependent ECC.

Example 25 includes the processor of Example 24, where the execution unit is to load the data having the one or more errors without providing metadata compatible with the metadata dependent ECC.

Example 26 includes the processor of any one of Examples 23 to 25, where the execution unit, to perform the operations, is to load the ECC and store the ECC in either the destination storage location or a second destination storage location.

Example 27 includes the processor of any one of Examples 23 to 26, where the execution unit is to perform a plurality of operations atomically, the plurality of operations including to said load the data, said store the data, load the ECC, and store the ECC in either the destination storage location or a second destination storage location.

Example 28 includes the processor of any one of Examples 23 to 27, where the instruction is a privileged-level instruction.

Example 29 includes the processor of any one of Examples 23 to 28, further including a cache, and where the destination storage location is in the cache.

Example 30 includes the processor of any one of Examples 23 to 28, where the destination storage location is a register of the processor.

Example 31 includes the processor of Example 30, where the instruction is to indicate the register.

Example 32 is a processor including a decode unit to decode an instruction. The instruction is to indicate address information corresponding to a location of data in system memory. The processor also includes an execution unit coupled with the decode unit. The execution unit is to perform operations corresponding to the instruction. The operations include to load an error correction code (ECC) corresponding to the data from the system memory, and to store the ECC in a destination storage location.

Example 33 includes the processor of Example 32, where the error correction code includes a metadata dependent ECC.

Example 34 includes the processor of Example 33, where the execution unit is to load the ECC without providing metadata compatible with the metadata dependent ECC.

Example 35 includes the processor of any one of Examples 32 to 34, where the execution unit, to perform the operations, is to load the data from the system memory. The data is to have one or more errors. The load of the data having the one or more errors is to bypass application of the ECC to the data having the one or more errors. The operations also include to store the data having the one or more errors in either the destination storage location or a second destination storage location.

Example 36 includes the processor of any one of Examples 32 to 35, where the execution unit is to perform a plurality of operations atomically. The plurality of operations including to said load the ECC, said store the ECC, load the data having the one or more errors, and store the data having the one or more errors in either the destination storage location or a second destination storage location.

Example 37 includes the processor of any one of Examples 32 to 36, where the instruction is a privileged-level instruction.

Example 38 includes the processor of any one of Examples 32 to 37, further including a cache, and where the destination storage location is in the cache.

Example 39 includes the processor of any one of Examples 32 to 37, where the destination storage location is a register of the processor.

Example 40 includes the processor of Example 39, where the instruction is to indicate the register.

Example 41 is a processor or other apparatus that includes means for performing the method of any one of Examples 10-15.

Example 42 is an optionally non-transitory and/or tangible machine-readable medium, which optionally stores or otherwise provides instructions including a first instruction, the first instruction if and/or when executed by a processor, computer system, electronic device, or other machine, is operative to cause the machine to perform the method of any one of Examples 10-15.

## Claims

1. An apparatus comprising:
a decode unit to decode an instruction, the instruction to indicate address information corresponding to a location of data in system memory, wherein the data is to have one or more errors; and
an execution unit coupled with the decode unit, the execution unit to perform operations corresponding to the instruction, including to:
determine whether there is only a single metadata value, out of all possible metadata values of a given bit length, that allows a metadata dependent error correction code (ECC) to correct the one or more errors in the data, wherein the metadata dependent ECC is to correspond to the data and is to be stored in the system memory; and
store the single metadata value in a destination storage location if the determination is that there is only the single metadata value; or
indicate the determination is that there is not only the single metadata value.

2. The apparatus of claim 1, wherein the execution unit, to said determine whether there is only the single metadata value, is to:
determine there is only the single metadata value if the metadata dependent ECC corrects the one or more errors in the data for only one of said all possible metadata values; or
determine there is not only the single metadata value if the metadata dependent ECC does not correct the one or more errors in the data for any of said all possible metadata values or corrects the one or more errors in the data for at least two of said all possible metadata values.

3. The apparatus of any one of claims 1 to 2, wherein the execution unit is to compute whether each of said all possible metadata values allows the metadata dependent ECC to correct the one or more errors in the data.

4. The apparatus of any one of claims 1 to 2, wherein the execution unit, to said determine whether there is only the single metadata value, is to:
perform a different attempted access to the data with each of said all possible metadata values; and
determine there is only the single metadata value if an indication that the data has an error is not returned for only one of the attempted accesses; or
determine there is not only the single metadata value if an indication that the data has an error is not returned for zero or at least two of the attempted accesses.

5. The apparatus of any one of claims 1 to 4, wherein the instruction is a privileged-level instruction.

6. The apparatus of any one of claims 1 to 5, further comprising a cache, and wherein the destination storage location is in the cache.

7. The apparatus of any one of claims 1 to 5, wherein the destination storage location is a register of a processor having the decode unit.

8. The apparatus of claim 7, wherein the instruction is to indicate the register.

9. A method comprising:
determining that there is only a single metadata value, out of all possible metadata values of a given bit length, that allows a metadata dependent error correction code (ECC) to correct one or more errors in data in system memory, wherein the metadata dependent ECC corresponds to the data and is stored in the system memory; and
performing a load operation for the data with the single metadata value.

10. The method of claim 9, wherein determining that there is only the single metadata value includes determining that the metadata dependent ECC corrects the one or more errors in the data for only the single metadata value out of said all possible metadata values.

11. The method of any one of claims 9 to 10, wherein determining that there is only the single metadata value includes computing whether each of said all possible metadata values causes the metadata dependent ECC to correct the one or more errors in the data.

12. The method of any one of claims 9 to 11, wherein determining that there is only the single metadata value is performed in response to decoding and executing a single instruction, the single instruction indicating address information corresponding to a location of the data in the system memory.

13. The method of any one of claims 9 to 12, further comprising receiving the data corrected of the one or more errors by the metadata dependent ECC based on the single metadata value.

14. The method of any one of claims 9 to 13, wherein the data having the one or more errors is in a page in the system memory, and further comprising paging out the page from the system memory to a secondary storage, including storing the data corrected of the one or more errors and the single metadata value in a page in the secondary storage.

15. A computer program comprising instructions which, when executed by a processor, causes the processor to perform the method of any one of claims 9 to 14.
